# EUROPEAN PATENT APPLICATION

(11) **EP 2 351 877 A1**
(43) Date of publication of application: **03.08.2011**
(21) Application number: 09822072.6
(22) Date of filing: 22.10.2009
(51) Int. Cl.: C25D 9/08, C25D 11/00, C25D 11/02, H01G 4/08

(54) **METHOD FOR FORMING BORON-CONTAINING THIN FILM AND MULTILAYER STRUCTURE**

(30) Priority: 22.10.2008 JP 2008272416; 22.10.2008 JP 2008272423; 22.10.2008 JP 2008272436; 22.10.2008 JP 2008272439
(71) Applicant: Rohm Co., Ltd., Kyoto-shi, Kyoto 615-8585 (JP); The Doshisha, Kyoto 602-8580 (JP); I'MSEP CO., LTD., Kyoto-shi, Kyoto 600-8813 (JP)
(72) Inventor: TSURUMI, Naoaki, Kyoto-shi Kyoto 615-8585 (JP); ITO, Yasuhiko, Kyotanabe-shi Kyoto 610-0394 (JP); TOKUSHIGE, Manabu, Kyotanabe-shi Kyoto 610-0394 (JP); SATOMI, Tsuyoshi, Kyotanabe-shi Kyoto 610-0394 (JP); NISHIKIORI, Tokujiro, Kyotanabe-shi Kyoto 610-0332 (JP); TSUJIMURA, Hiroyuki, Kyotanabe-shi Kyoto 610-0332 (JP)
(74) Representative: Barth, Stephan Manuel
(86) International application number: PCT/JP2009/068206
(87) International publication number: WO 2010/047375

(57) **Abstract**

To provide a method for forming a boron-containing thin film, by which a uniform boron thin film with good adhesion can be formed on the surface of a processing object, and also to provide a multilayer structure. An electrolysis apparatus includes an anode 1, a processing object 2 serving as a cathode, an electrolytic vessel 4, and a molten salt electrolytic bath 5. A variable power supply 6 is connected between the anode 1 and the processing object 2. The variable power supply 6 is configured to be capable of changing a voltage or current waveform during the electrolysis process. Current of an appropriate pulse waveform is applied in the molten salt for electrolysis to form a uniform boron thin film 3 within the processing object 2 having a complicated shape.

## Description

### TECHNICAL FIELD

The present invention relates to a method for forming a boron-containing thin film and a multilayer structure.

### BACKGROUND ART

Heretofore, CVD or PVD methods have been used to form boron thin films. The boron thin films formed by those methods generally have problems including poor adhesion due to the influence of residual stress. Moreover, the method for forming a boron thin film by vapor-phase reaction requires a large-scale deposition apparatus and has significant limitation in shape and size of processable substrates. It is especially difficult to form a uniform boron coating on a substrate of a complicated shape. Such a method therefore has a problem also in terms of production efficiency.

On the other hand, there is a proposal of a method for manufacturing a boron thin film using a molten salt electrolytic method. The "molten salt" is an ionic liquid obtained by melting a single salt or by mixing and melting a plurality of salts. The molten salt is a functional liquid capable of well dissolving various substances and having various excellent features such as low vapor pressure even at high temperature, high chemical stability, and high electrical conductivity.

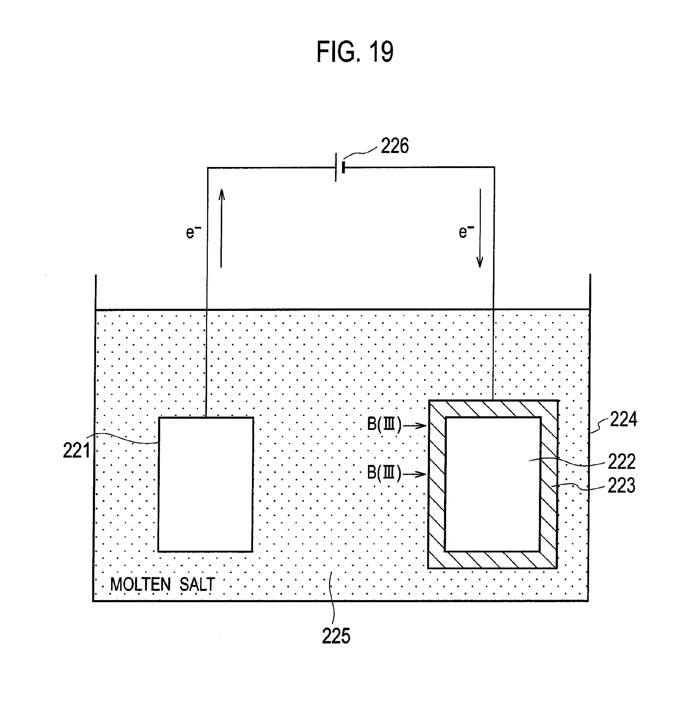

As shown in Fig. 19, a DC power supply 226 is connected to an anode 221 and a cathode 222, and electrolysis is performed in molten salt 225 including ions containing boron. The ions containing boron are reduced on the surface of the cathode 222 as a processing object, and boron 223 is electrolytically deposited on the surface of the processing object.

### PRIOR ART DOCUMENTS

### PATENT DOCUMENTS

Patent Document 1: Japanese Patent Application Publication No. 2002-97574
Patent Document 2: Japanese Examined Patent Application Publication No. Hei 6-10338
Patent Document 3: Japanese Patent Application Publication No. 2006-237478
Patent Document 4: Japanese Patent Application Publication No. Hei 6-33222
Patent Document 5: Japanese Patent Application Publication No. Hei 6-267783
Patent Document 6: United States (US) Patent No. 6939775 Description

### Non-PATENT DOCUMENTS

Non-Patent Document 1:K. Matiasovsky, M. Chrenkova-paucirova, P. Fellner, M. Makyta, Surface and Coating Technology, 35, 133-149 (1988).
Non-Patent Document 2: Ashish Jain, S. Anthonysamy, K. Ananthasivan, R. Ranganathan, Vinit Mittal, S. V. Narasimahan, P. R. Vasudeua Rao, Materials Characterization, 59 (7), 890-900 (2008).

### SUMMARY OF THE INVENTION

### PROBLEMS TO BE SOLVED BY THE INVENTION

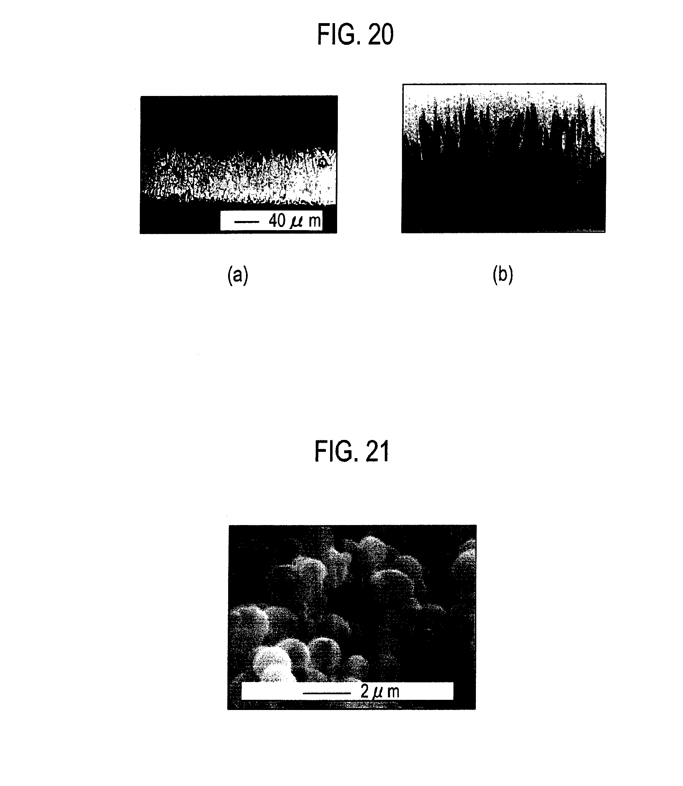

However, even in the case of using the aforementioned conventional molten salt electrolysis method, it is difficult to form a uniform boron film with good adhesion on the surface of the processing object. For example, Non-Patent Document 1 shows photographs of a cross-section when the aforementioned conventional molten salt electrolysis method is used in an attempt to form a boron thin film. The photographs thereof are shown in Fig. 20. Fig. 20 (a) is a micrograph of a cross-section, and Fig. 20 (b) is an SEM photograph showing an enlarged cross-section of Fig. 20(a). These reveal that crystals are grown in a dendritic manner and show that the crystals are not uniform and have poor adhesion.

Non-Patent Document 2 also provides a surface photograph taken when the aforementioned conventional molten salt electrolysis method is used in an attempt to form a boron thin film. This is shown in Fig. 21. Fig. 21 shows an SEM photograph, in which boron forms particles but not a thin film. As described above, with the aforementioned conventional molten salt electrolysis method, boron forms no thin film, or even if boron forms a thin film, it is extremely difficult to form a uniform thin film of boron with good adhesion.

Meanwhile, nitride insulators such as aluminum nitride (AlN) and boron nitride (BN) are excellent in thermal conductivity, abrasion resistance, hardness, stability at high temperature, thermal shock resistance and the like and are valuable in various fields of industry. Since especially boron nitride is immune to deterioration due to a carburizing phenomenon, boron nitride thin films are suitable for use in the fields of surface treatment for cutting tools, mechanical parts and the like, use for insulation at high temperature, and the like. Accordingly, the boron nitride thin films are highly expected to be used for tools for cutting iron (Fe) materials and partially put into practical use.

In recent years, AlN and BN have been attracting attentions in the fields of optical and electronic devices because AlN and BN have physical properties of a wide band-gap and the like. Because of such a background, studies are active on chemical vapor deposition (CVD) and physical vapor deposition (PVD) of nitride insulating thin films for applications thereof to cutting tools and devices (for example, see Patent Document 3) . However, in the case of forming such nitride insulating films (especially BN type) by a vapor deposition process, very high residual stress is caused. The nitride insulating films have poor adhesion to the substrates and easily peeled off. Furthermore, the nitrides have high melting point and are easily decomposed. Accordingly, it is difficult to apply a thermal spraying technique of melting the material and spraying the same onto the substrates.

In order to overcome these disadvantages, various attempts have been proposed such as formation of an intermediate layer between a nitride insulating layer and a substrate (for example, see Patent Document 4).

Meanwhile, capacitors can be cited as devices using such nitride insulating layers. Dielectrics of the capacitors generally often used are oxides. The oxides can be easily formed and have a large advantage of very excellent insulation. On the other side of the coin, oxide ions (O²⁻) are easily released under the high temperature environment and are likely to cause faults. The oxygen vacancies have positive charges. Accordingly, it is thought that when an electrical field is applied, the oxygen vacancies are concentrated on the cathode to form an internal electrical field. It is thought that this internal electrical field causes a large number of electrons to be released from the cathode to rapidly increase leakage current, which in turn results in breakdown of the capacitors.

In order to implement a capacitor stably operating under high temperature environments, it is thought to be useful to use an inorganic insulating film of a non-oxide type. As shown in Patent Document 5, for example, a ceramic capacitor including aluminum nitride (AlN) serving as a nitride insulator is therefore proposed. However, since AlN has a low dielectric constant, the dielectric sheet needs to be made extremely thin and form a multilayer of several tens to hundreds of layers or more in order to obtain a practical electrostatic capacitance. Moreover, the nitride insulators generally have high melting points (2200°C (AlN) and 3000°C (BN), for example) and are resistant to sintering. Accordingly, it is technically very difficult to implement a process of co-firing a multilayer of nitride insulators and metal. Such a device is therefore not put into practical use yet.

Patent Document 6 states that boron nitride (BN) is deposited by PVD (physical vapor deposition) and applied to a capacitor. Using this method, a thin BN dielectric film can be formed. However, in order to obtain a practical electrostatic capacitance, it is necessary to form a multilayer of several tens to a hundred or more layers. If a good-quality film is to be formed in a high-vacuum chamber, the growth speed needs to be very low. When good-quality dielectric films cannot be formed, the leakage current of the capacitor is increased, and the breakdown voltage is reduced. The method of repeating stack by a process requiring patterning with low growth rate is not industrially practical.

The present invention is made to solve the aforementioned problems and aims to provide a practical method for forming a boron-containing thin film by which a uniform boron-containing thin film with good adhesion can be formed on the surface of a processing object such as a substrate, and also to provide a multilayer structure including a good-quality nitride insulating layer with good adhesion to the substrate.

### MEANS FOR SOLVING THE PROBLEMS

In order to achieve the aforementioned object, a method for forming a boron-containing thin film according to the present invention is mainly characterized by including the steps of: placing a processing object as a cathode in a molten salt containing boron ions; performing electrolysis by applying current in the molten salt from a power supply; and forming a boron thin film or boron compound thin film at least in a part of a surface of the processing object by the electrolysis step, wherein a voltage or current waveform of the power supply is caused to change in the electrolysis step.

In addition, another method for forming a boron-containing thin film according to the present invention is mainly characterized by including the steps of: preparing a processing object including a substrate and also containing boron; and performing molten salt electrolysis using the processing object as an anode in a molten salt in which nitride ions are dissolved and then oxidizing the nitride ions on the processing object to form a boron nitride thin film.

Moreover, a multilayer structure according to the present invention is mainly characterized by including: a substrate mainly composed of metal; and a nitride insulator layer provided above the substrate, wherein the nitride insulator layer has a nitrogen concentration gradually increasing in a thickness direction of the nitride insulator layer starting from a first primary surface thereof on the substrate side.

### EFFECTS OF THE INVENTION

According to the method for forming a boron-containing thin film of the present invention, the processing object is arranged in the molten salt as the cathode, and the current or voltage waveform of the power supply is changed during the electrolysis process. Accordingly, compared to the conventional molten salt electrolysis method, a uniform boron-containing thin film with good adhesion can be formed on the surface of the processing object. In particular, a uniform boron containing thin film can be formed inside a processing object having a complicated shape.

Moreover, the nitride ions (N³⁻) are oxidized on the processing object by the molten salt electrolysis with the processing object set as the anode in the molten salt in which the nitride ions are dissolved. Accordingly, it is possible to form a uniform nitride boron thin film with good adhesion on the surface of the processing object.

Furthermore, according to the multilayer structure of the present invention, it is possible to provide a multilayer structure including a nitride insulating layer with good adhesion to the substrate.

Still furthermore, if the multilayer structure of the present invention is applied to a capacitor, the dielectric between the electrodes is composed of a nitride insulating film, and the nitrogen component of the nitride insulating film includes a composition gradient in the direction of electrodes. For the dielectric is composed of a nitride not an oxide, no oxygen vacancies are caused unlike the conventional one. The capacitor can therefore stably operate under the high temperature environment. Moreover, since the nitrogen component of the nitride insulating film has a composition gradient in the electrode direction, the dielectric can have high insulation, and the capacitor can have high breakdown voltage.

### BRIEF DESCRIPTION OF THE DRAWINGS

Fig. 1 is a diagram showing a configuration example of an electrolysis apparatus used in a method for forming a boron-containing thin film according to a first embodiment of the present invention.
Fig. 2 is a diagram showing a pattern of current applied to the electrolysis apparatus of Fig. 1.
Fig. 3 is a table showing a comparison between examples by the method for forming a boron-containing thin film according to the first embodiment and an example by a conventional method.
Fig. 4 shows SEM photographs of cross-sections of porous Ni with a boron-containing thin film electrodeposited thereon by the method according to the first embodiment.
Fig. 5 is a diagram showing a result of an X-ray diffraction analysis for a boron-compound thin film fabricated by the method for forming a boron-containing thin film according to the first embodiment.
Fig. 6 is a photograph showing an SEM image of the surface of the boron compound thin film of Fig. 5.
Fig. 7 shows diagrams illustrating a structure example treated with surface enlargement.
Fig. 8 is a schematic diagram for explaining a method for forming a boron-containing thin film according to a second embodiment.
Fig. 9 is a schematic diagram showing a boron nitride thin film formed by the method for forming a boron-containing thin film according to the second embodiment.
Fig. 10 shows schematic diagrams illustrating an example of a processing object of the method for forming a boron-containing thin film according to the second embodiment.
Fig. 11 is a schematic diagram illustrating another example of a processing object of the method for forming a boron-containing thin film according to the second embodiment.
Fig. 12 shows examples of the XPS spectrum of the boron nitride thin film formed by the method for forming a boron-containing thin film according to the second embodiment.
Fig. 13 is an example of the FT-IR spectrum of the nitride insulating film of a multilayer structure fabricated by the method according to the second embodiment.
Fig. 14 is an STEM photograph of a sample formed by a method of manufacturing the multilayer structure fabricated by the method according to the second embodiment.
Fig. 15 is a transmission electron micrograph of a boron nitride thin film formed by the method for forming a boron-containing thin film according to the second embodiment.
Fig. 16 is a transmission electron micrograph of a boron nitride thin film formed by a related art.
Fig. 17 shows examples of the XPS spectrum of the boron nitride thin film formed by the method for forming a boron-containing thin film according to the second embodiment.
Fig. 18 is a TEM image showing a cross-section of the boron nitride thin film subjected to the measurement of the XPS spectrum of Fig. 17 and a base material or the like with the boron nitride thin film formed thereon.
Fig. 19 is a diagram showing a configuration example of an electrolysis apparatus used in the conventional method for forming a boron thin film.
Fig. 20 shows SEM photographs of the surface when a conventional electrolysis is used in an attempt to form a boron thin film.
Fig. 21 is a SEM photograph of the surface when a conventional electrolysis is used in an attempt to form a boron thin film.
Fig. 22 is a schematic diagram showing a configuration of a multilayer structure according to a third embodiment.
Fig. 23 is a schematic diagram for explaining a method for forming an intermediate layer of the multilayer structure according to the third embodiment.
Fig. 24 is a schematic diagram showing an example in which the intermediate layer of the multilayer structure according to the third embodiment is formed.
Fig. 25 shows schematic diagrams illustrating examples in which the intermediate layer of the multilayer structure according to the third embodiment is formed.
Fig. 26 is a schematic diagram for explaining a method for forming a nitride insulating layer of the multilayer structure according to the third embodiment.
Fig. 27 is a TEM image showing a cross-section of the multilayer structure according to the third embodiment with a compound layer not fabricated.
Fig. 28 shows TEM images showing cross-sections of the multilayer structure according to the third embodiment with a compound layer not fabricated.
Fig. 29 is a diagram showing an example of a cross-sectional structure of a capacitor according to a fourth embodiment.
Fig. 30 is a diagram showing an example of a cross-sectional structure of the capacitor according to a fourth embodiment.
Fig. 31 shows SEM images of the surface and a cross-section of the capacitor according to the fourth embodiment.
Fig. 32 is a TEM image of a cross-section of the capacitor according to the fourth embodiment.
Fig. 33 shows diagrams illustrating structure examples of a processing object subjected to surface enlargement.
Fig. 34 is a diagram illustrating a process of electrolytic nitriding for the processing object.

### MODES FOR CARRYING OUT THE INVENTION

Next, a first embodiment of the present invention will be described with reference to the drawings. In the following description of the drawings, same or similar reference signs denote same or similar elements and portions. It should be noted that the drawings are schematic, and the relation between thickness and planar dimensions, the proportion of thicknesses of layers and the like in the drawings are different from real ones. Accordingly, specific thicknesses and dimensions should be determined in consideration of the following description. Moreover, the drawings also include portions having different dimensional relations and ratios from each other.

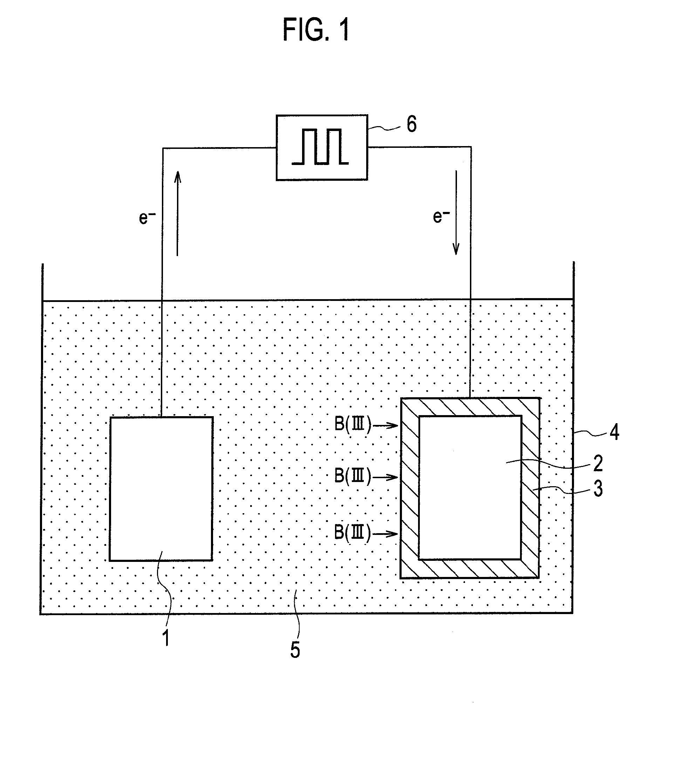

Fig. 1 shows a configuration example of an electrolysis apparatus for carrying out a method for forming a boron-containing thin film of the present invention. Hereinafter, a description will be given of a process where a boron-containing thin film is formed on a processing object (a cathode) by electrolysis in a molten salt including boron-containing ions. The "molten salt" is an ionic liquid obtained by melting a single salt or by mixing and melting a plurality of salts. The molten salt is a functional liquid capable of well dissolving various substances and having various excellent features such as low vapor pressure at high temperature, chemical stability, and high electrical conductivity.

The electrolysis apparatus includes an anode 1 (a counter electrode), a processing object 2 serving as a cathode (a working electrode), an electrolytic vessel 4, and a molten salt electrolytic bath 5. Moreover, a variable power supply 6 capable of changing the current or voltage waveform is connected between the anode 1 and the processing object 2. Herein, in the embodiment, first, a description will be given of a method for forming a boron thin film as the boron-containing thin film.

The processing object 2 functions as a working electrode on which the boron thin film is formed. The processing object 2 is composed of a conductive material such as Ni, for example. Preferably, the processing object 2 is composed of a material including an element capable of forming an alloy with boron such as Al, Co, Cr, Cu, Fe, Ni, Ir, Mn, Mo, Nb, Pd, Pt, Ru, Ta, Ti, V, W, Y, and Zr, for example. This is because use of such a material allows a layer having a gradient composition to be formed between the boron thin film and the processing object and provides higher adhesion between the boron thin film and the processing object.

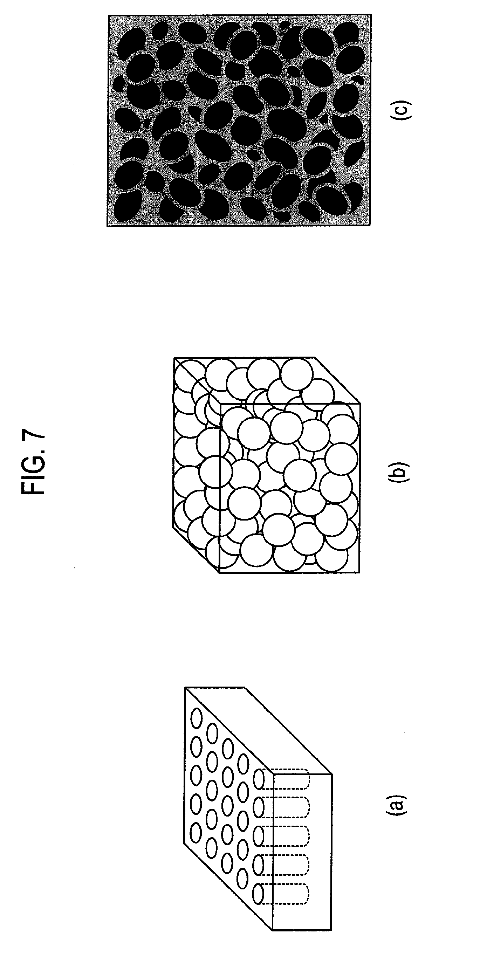

The processing object 2 serving as a cathode has a complicated shape especially in industrial applications because of surface enlargement treatment or the like. Fig. 7 schematically shows examples treated with surface enlargement as examples of the complicated shape ((a): a trench structure, (b) : a sintered structure, (c): a porous structure). The processing object 2 may be treated with surface enlargement other than those examples. In any of the above structures, the surface area per volume is enlarged by formation of a number of pores. In the case of performing surface enlargement in such a manner, the specific surface area is preferably 200 to 10000 m²/m³ and more preferably 1000 to 6000 m²/m³. The minimum diameter of the formed pores and voids is preferably 0.1 to 5 mm and more preferably 0.2 to 1 mm.

The anode 1 is composed of an electrode material (an insoluble anode) capable of oxidizing ions including O²⁻ and Cl⁻ generated by reduction reaction of boron-containing ions. Moreover, the anode material may be a boron electrode with conduction increased by doping or the like. The oxidation reaction on the anode can be anode dissolution of boron (B -> B(III) + 3e⁻) in this case. Boron ions serving as a basis of the boron thin film to be formed can be sufficiently supplied continuously.

The solute dissolved in the molten salt electrolytic bath 5 generally only needs to be a boron source used for reduction and precipitation of boron at molten salt electrolysis. In many cases, such a boron source is a compound containing oxygen or fluorine and alkali metal or alkaline earth metal together with boron. Examples thereof can be Na₂B₄O₇ and KBF₄. Each of these materials may be used as a single salt but is preferably mixed with an alkali metal halide or alkaline earth metal halide for use. This is because the mixture has a lower melting point and the electrolysis can be performed at lower temperature.

Herein, if current is applied between the anode 1 and the processing object 2 serving as the cathode, due to cathode electrolysis, boron ions (B(III)) in the molten salt electrolytic bath 5 are reduced on the surface of the processing object 2, thus forming a boron-containing thin film 3 on the processing object 2. Alternatively, an alloy film of boron and the processing object is formed. The reaction thereof is expressed by the following formula.

B(III) + 3e⁻ -> B

In the case of the ion source containing boron, for example, in the case of B₄O₇²⁻, the reaction formula is as follows. B₄O₇²⁻+12e⁻ -> 4B + 7O²⁻

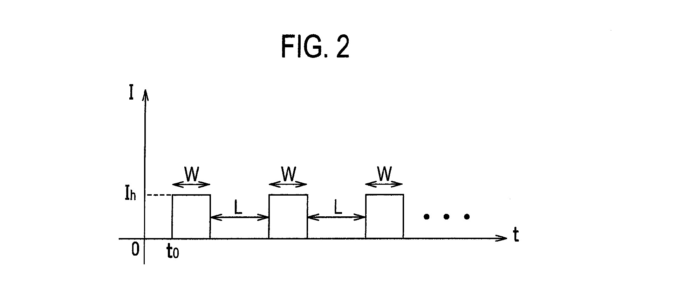

The present invention is different from the conventional one in terms of using the variable power supply 6 capable of changing the current or voltage waveform instead of a DC power supply as shown in Fig. 19. As shown in Fig. 2, for example, a pulse current (where on and off periods are repeated) is applied between the anode 1 and the processing object 2 serving as a cathode. This allows the boron-containing thin film 3 to be uniform and have good adhesion. The pulse current does not include a current component flowing from the processing object 2 to the anode 1.

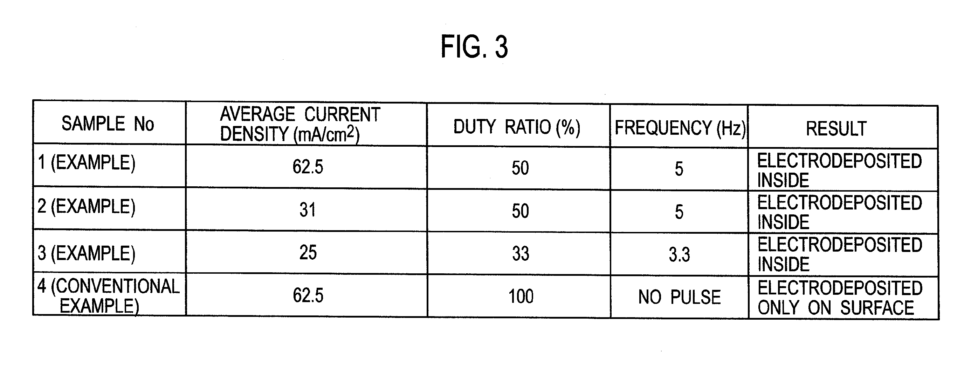

Fig. 3 shows a result obtained by applying the pulse current. In this embodiment, the electrolysis apparatus as shown in Fig. 1 was used, and the configuration of each component was set as follows. The molten salt was Na₂B₄O₇-NaCl (80:20 wt%), and the temperature thereof is maintained at 800°C. As for the electrode materials, the processing object 2 was composed of a porous nickel sheet (5 mm×10 mm×1 mm), and the anode 1 was composed of glassy carbon. As for the pulse electrolysis conditions, current Iₕ of Fig. 2, the pulse frequency, and the duty ratio (W/ (W+L)) calculated from an on period W and an off period L of the current were changed as shown in Fig. 3 for confirmation. Sample No. 4 is a conventional example by electrolysis without pulses. On the other hand, samples No. 1 to 3 are examples by electrolysis with constant current pulses. At this time, in the conventional example, the average current density for an effective surface area was 62.5 mA/cm², which is calculated from the catalog value of the specific surface area of porous Ni. In the other examples, the average current densities were 12.5 to 62.5 mA/cm². In the electrolysis using the constant current (not pulsing), boron was not deposited within the porous material. On the other hand, in the samples No. 1 to 3, boron was electrodeposited within the porous material. This revealed that application of pulse current improved the state of electrodeposition.

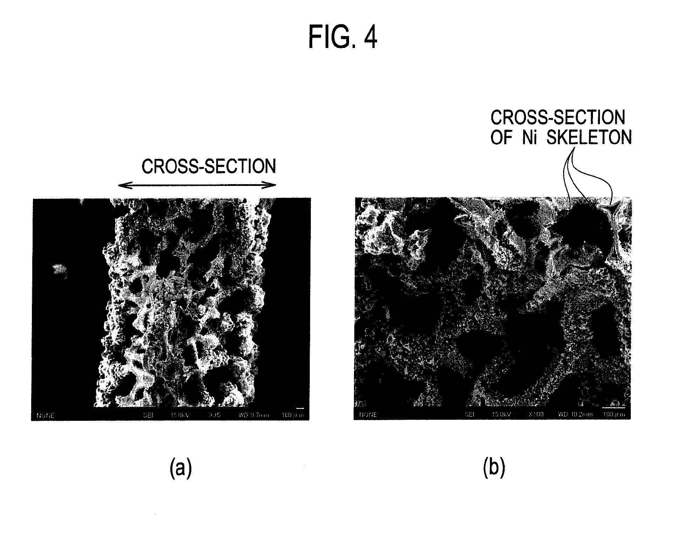

Fig. 4 shows an SEM photograph of a cross-section of porous Ni with a boron thin film electrodeposited thereon by the method of the present invention. Fig. 4(a) is a photograph of the entire cross-section, and Fig. 4(b) is an enlarged photograph of the inside. As shown in the photographs, boron was electrodeposited even within the sample. The thickness of the boron thin film can be about the order of several nanometers to several tens micrometers. Depending on the usage thereof, the thickness of the coating of a fusion reactor wall is about 10 nm to 1 µm, for example.

Meanwhile, an example of a boron compound thin film fabricated as the boron-containing thin film using pulse electrolysis in the configuration of Fig. 1 is shown below. The molten salt electrolytic bath 5, the processing object 2, and the pulse electrolysis conditions were changed from those of the above-described examples in the configuration of Fig. 1. The other components are the same. The molten salt electrolytic bath 5 is composed of NaCl-CaCl₂ eutectic salt (32.4:67.6 mol%) added with 10 mol% of NaBO₂ . The bath temperature of the molten salt electrolytic bath 5 was set to 700°C. The processing object 2 is a Ta substrate having a size of 10 mm×20 mm and a thickness of 0.5 mm. In the pulse electrolysis conditions, the current Iₕ of Fig. 2 was set to 300 mA, and the on and off periods W and L of the current are 0.1 and 1 sec, respectively (the duty ratio is about 9%). This was continued 2000 cycles for electrolysis.

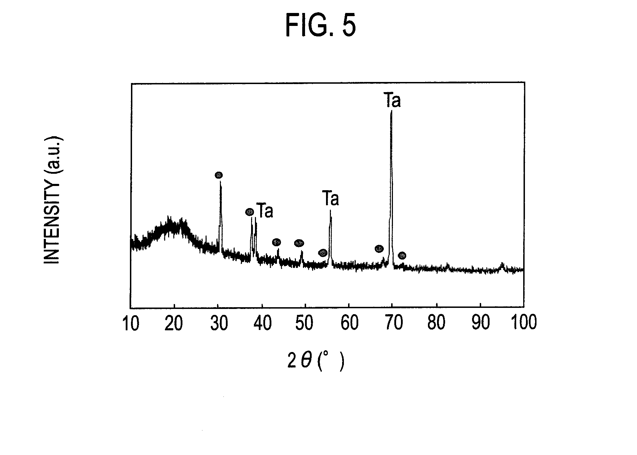

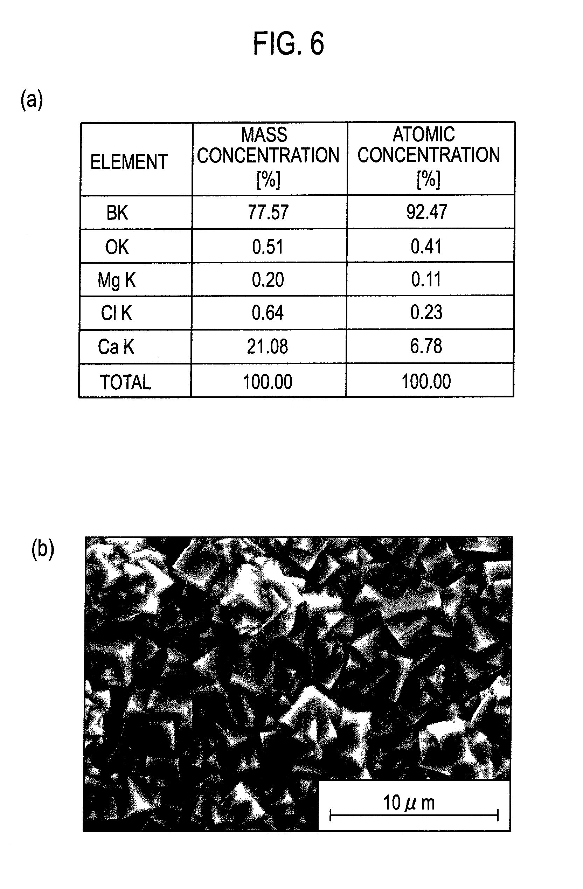

Fig. 5 shows a result of X-ray diffraction analysis for the thin film electrodeposited on the surface of the processing object 2 at that time. Fig. 6 shows an SEM image of the surface by SEM/EDX and a result of quantitative analysis. The vertical axis of Fig. 5 indicates diffraction intensity, and the horizontal axis thereof indicates incident angle. The peak marked with black circle shows that the thin film is composed of CaB₆. Fig. 6(a), which is the result of quantitative analysis of the thin film, reveals that the thin film is composed of element B (boron) and element Ca (calcium). From these data pieces, it was confirmed that the thin film of calcium boride (CaB₆) was formed. Moreover, as shown in Fig. 6(b), in the calcium boride thin film electrodeposited on the surface of the processing object 2, crystals are grown uniformly to provide good adhesion.

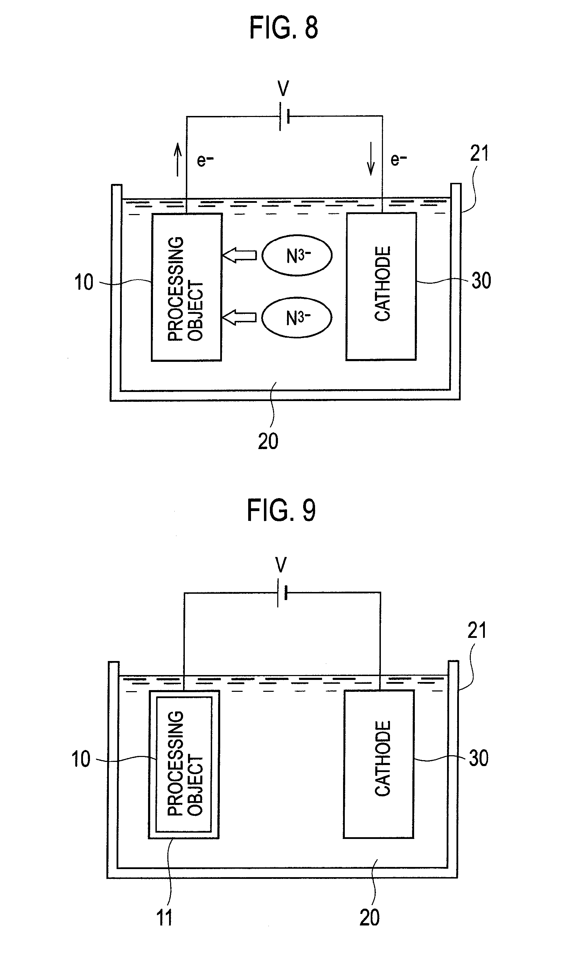

Next, a description will be given of a second embodiment of the present invention. The method for forming a boron-containing thin film according to the second embodiment is a method for forming in particular a boron nitride thin film among boron compound thin films. As shown in Fig. 8, this method includes a step of preparing a processing object 10 including a substrate and containing boron (B) ; and a step of performing molten salt electrolysis with the processing object 10 used as the anode in a molten salt 20 with nitride ions (N³⁻) dissolved to oxidize the nitride ions on the processing object 10 for forming a boron nitride thin film. As described above, the method for forming a boron-containing thin film according to the second embodiment employs a molten salt electrochemical process (MSEP).

The processing object 10 is a processing object including a substrate containing boron and a conducting material brought into contact with the substrate. The processing object 10 can be a processing object including a sintered boron sheet wound by nickel (Ni) wire, for example. The conducting material used in the processing object 10 just needs to be conductive and is not limited to nickel. Preferably, the conducting material is a metal or an alloy. In order to continue the electrochemical process, however, it is preferable that the conductive material be a material less likely to generate an insulating nitride. For example, aluminum (Al) nitrided to form an insulator and zinc (Zn) nitrided to form a semiconductor are not suitable for the conducting material. The form of the anode conducting material is not limited to wire and may be a pinholder-shaped conductor brought into contact with the anode. The processing object 10 can be a boride substrate of tantalum boride or the like.

The molten salt 20 can be an alkaline metal halide or alkaline earth metal halide. Furthermore, the molten salt 20 is not limited if nitride ions (N³⁻) can stably exist without being reacted with the molten salt to be consumed. Alkaline metal halides and alkaline earth metal halides are especially preferred. As the molten salt 20, LiCl-KCl-Li₃N type molten salt composed of lithium chloride-potassium chloride (LiCl-KCl) eutectic salt (51:49 mol%) added with about 0.05 to 2 mol% of lithium nitride (Li₃N) and the like are suitable.

In the cathode 30, ions of the alkaline metal or alkaline earth metal of the component of the molten salt as the electrolytic bath are electrochemically reduced. For example, in the case where the molten salt 20 is LiCl-KCl-Li₃N type molten salt, Li⁺ is reduced for deposition of metal Li. The metal Li is electrodeposited as liquid to form metal fog and can cause a short circuit between the anode and cathode. Accordingly, the precipitated metal Li needs to be fixed to the cathode 30 by forming a Li alloy using a material more likely to form an alloy with Li as the cathode 30. For example, if the molten salt 20 is a LiCl-KCl-Li₃N type molten salt, the cathode 30 is made of metal Al capable of forming an alloy with Li.

The method for forming a thin film according to the second embodiment will be described below with reference to Fig. 8. Note that, the method for forming a thin film described below is just an example, and the present invention can be implemented by other various forming methods including modifications thereof. Hereinafter, a description will be given of a case where the molten salt 20 is a LiCl-KC1-Li₃N type molten salt and the cathode 30 is made of a metal Al plate as an example.

(i) As the processing object 10, a substrate including a boron member is prepared, for example, a boron sintered sheet wound by Ni wire. The processing object 10 is cleaned with an organic solvent, pure water, dilute hydrochloric acid, or the like if necessary.

(ii) In the molten salt 20 filled in the electrolytic vessel 21, the processing object 10 and cathode 30 are immersed. The temperature of the molten salt 20 is set to 300 to 550°C, for example, 450°C.

(iii) The electrolytic voltage V set to a predetermined voltage is applied across the processing object 10 and cathode 30. By the MSEP, the surface of the boron-containing substrate included in the processing object 10 is reformed as shown in Fig. 9, thus forming a boron nitride thin film 11. The anode potential is set to 0.6 V, for example, on a basis of the potential of nitrogen gas of 1 atmosphere in the molten salt 20. The electrolytic voltage V at this time is about 1. 0 V when the cathode reaction is Li deposition. The period of time when the electrolytic voltage V is applied (electrolysis time) is set to about 30 minutes, for example. The processing object 10 with the boron nitride thin film 11 formed in the surface is taken out from the electrolytic vessel 21 and then rinsed to remove residual salt.

In the method for forming a nitride thin film using the MSEP shown in Fig. 8, the anode potential needs to be such a potential that the nitride ions (N³⁻) are oxidized while the electrolyte solvent is not decomposed. When the molten salt 20 is a LiCl-KC1-Li₃N molten salt, on the basis of the potential of nitrogen gas of 1 atmosphere in the molten salt 20, the anode potential needs to be about -0. 3 to 3.3 V and preferably is +0.2 to 2.0 V.

The electrolysis time is set to about 3 to 120 minutes, for example, depending on the desired thickness of the boron nitride thin film 11. In the case of applying the boron nitride thin film 11 to a gate insulating film of a transistor, the electrolytic time is set so that the thickness of the boron nitride thin film 11 can be not more than 1 nm. In the case of applying the boron nitride thin film 11 to a blade of a cutting tool or the like, the electrolysis time is set so that the thickness of the boron nitride thin film 11 can be about 0.1 to 1 µm.

In the method for forming a thin film according to the second embodiment, the boron nitride film as an "insulator" is formed by electrochemical reaction. Accordingly, the electrolytic method is devised. Specifically, the electrolysis is performed using the conducting material other than boron as an acceptor of electrons from the electrochemical reaction field.

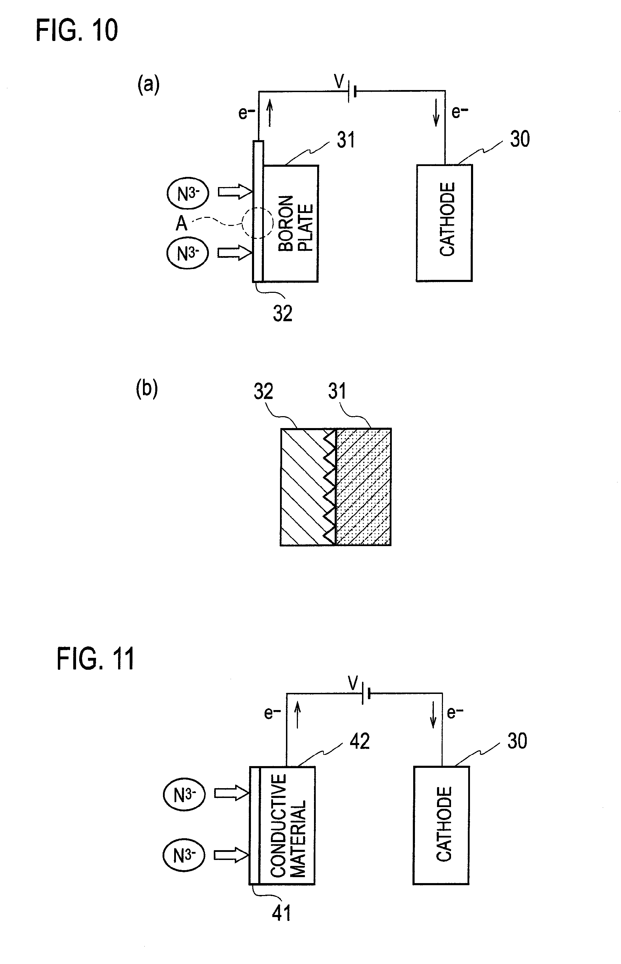

For example, as shown in Fig. 10(a), in the case where the boron member of the processing object 10 is a boron plate 31 having a plate shape, a linear or a needle-shaped conducting material 32 (an electron acceptor) is brought into contact with the surface of the boron plate 31 to actively cause electrochemical reaction (B + N³- -> BN + 3e⁻) on the surface of the boron plate 31. Fig. 10(b) is an enlarged view of an area surrounded by a broken line A of Fig. 10 (a). As shown in Fig. 10(b), a gap is generated between the boron plate 31 and the conducting material 32 due to the roughness of the surface of the conducting material 32, so that nitrogen ions (N³⁻) are supplied to the boron plate 31.

Boron nitride is an insulating film, and it has been difficult to electrochemically form a uniform boron nitride thin film on the boron plate. However, by applying current to the conducting material such as Ni wire wound around the boron plate as described above, the electrochemical reaction can continuously proceeds around the contact portion of the conducting material and the boron plate even if boron nitride as an insulator is formed.

In the case where the processing object 10 is a substrate including a boron thin film as the boron member formed on the surface of the conducting material as the electron acceptor, the electron acceptor is brought into contact with the surface of boron to form the boron nitride thin film in a similar manner to Fig. 10 (a). Alternatively, as shown in Fig. 11, in the case where boron of the processing object forms a thin film like a boron thin film 41, the aforementioned electrochemical reaction can be accelerated by bringing the conducting material 32 into contact with the processing object on the side opposite to the side where the nitride of the processing obj ect is formed. When the boron thin film 41 is thin, nitride ions are oxidized by the current flowing through the boron thin film 41, so that the boron thin film 41 is nitrided.

As described above, the example of using a metal plate as the cathode 30 is described. However, using a nitrogen gas electrode as the cathode 30 can cause reduction reaction of nitrogen (1/2N₂ + 3e⁻ -> N³⁻) as the electrochemical reaction on the cathode 30.

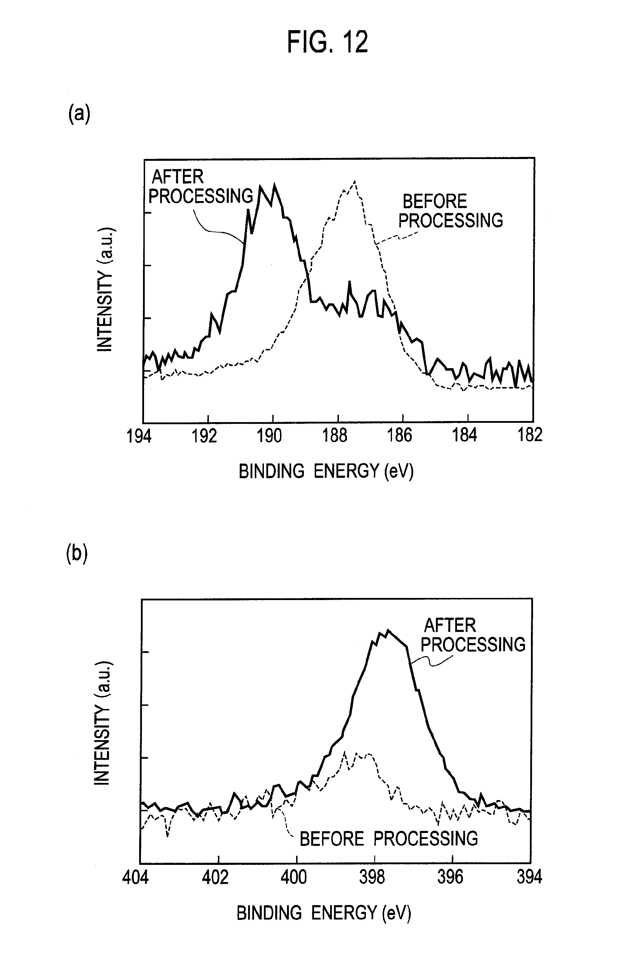

Figs. 12(a) and 12(b) show measurement results of XPS (X-ray photoemission spectroscopy) spectrums for surfaces of boron nitride thin films obtained by the method for forming a boron-containing thin film according to the second embodiment. Fig. 12(a) shows an XPS spectrum measurement result of 1s orbital of boron (B). Fig. 12(b) shows an XPS spectrum measurement result of Is orbital of nitrogen (N). As shown in Fig. 12(a), due to the formation of the boron nitride thin film 11, the binding energy shifts to higher energy.

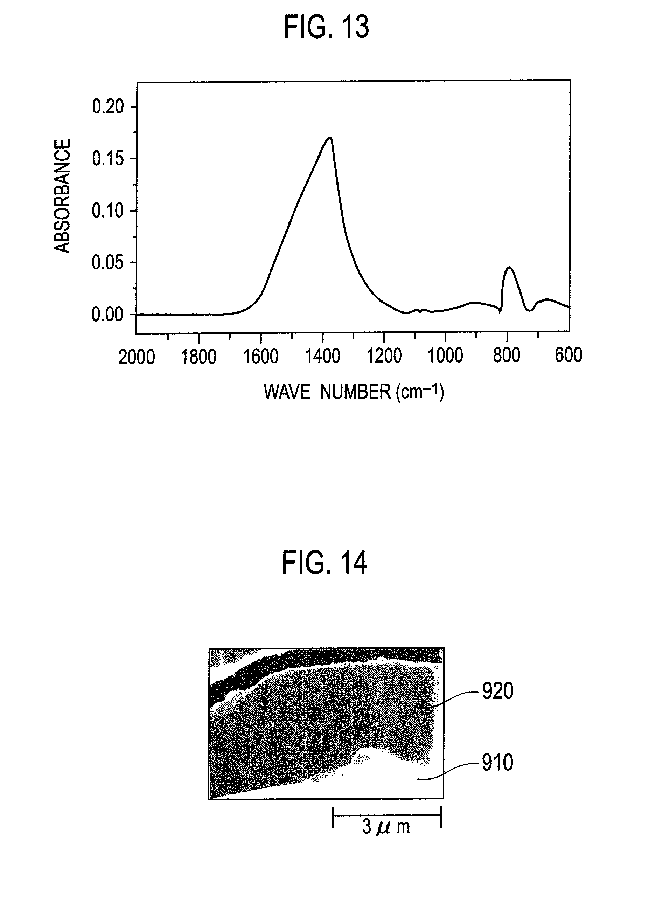

Fig. 13 shows a spectrum measured by Fourier transform infrared spectroscopy (FT-IR) after nitriding. The adsorption spectrum around wave numbers of 1380 cm⁻¹ and 800 cm⁻¹ result from B-N bonds.

Fig 14 shows an STEM photograph (SE image) of an example in which a boron nitride film 920 is formed on a boron substrate 910 by the method for forming a nitride thin film using the MSEP shown in Fig. 8. As shown in Fig. 14, the boron nitride film 920 is dense.

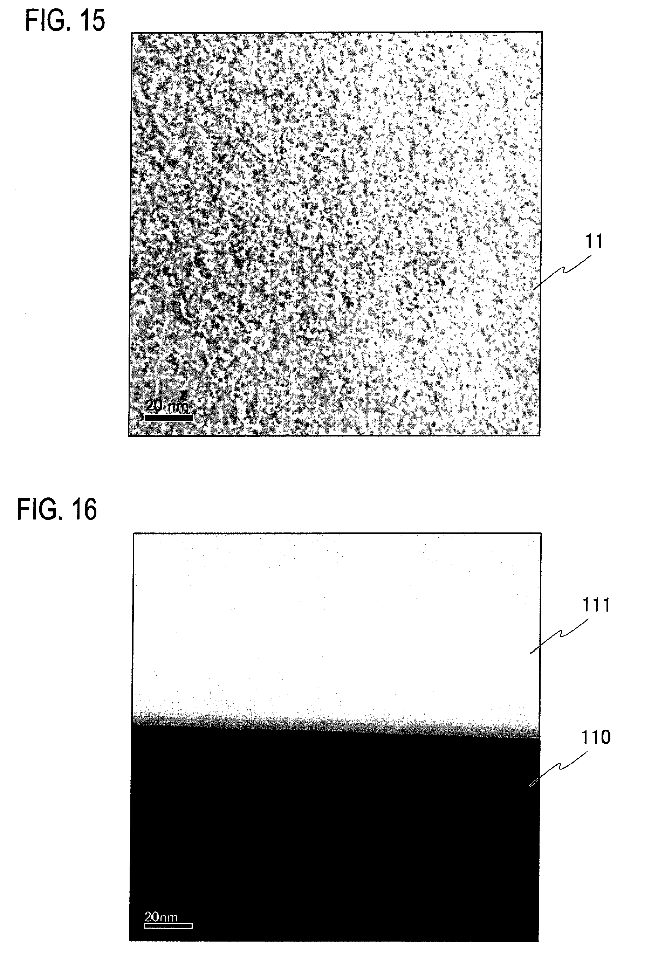

Fig. 15 shows a transmission electron micrograph of the boron nitride thin film 11 obtained by the method for forming a nitride thin film using the MSEP. Fig. 16 shows a transmission electron micrograph of a boron nitride thin film 111 formed on a silicon (Si) wafer 110 by RF magnetron sputtering, which is a general vapor-phase deposition process.

On the transmission electron microscope, the part capable of transmitting electrons looks white. On the other hand, the denser the boron nitride thin film, the less the electrons are likely to be transmitted therethrough. Compared to the transmission electron micrograph of the boron nitride thin film 111 shown in Fig. 16, white part is very little in the transmission electron micrograph of the boron nitride thin film 11 shown in Fig. 15. In other words, this reveals that the boron nitride thin film 11 formed by the forming method according to the embodiment of the present invention is dense.

On the other hand, as an example, a description is given of a case of using an electrolytic bath fabricated with a LiCl-KCl-CsCl eutectic salt as the molten salt 20 added with Li₃N (0.5 mol%). As the processing object 10, a base material including a Cu substrate with a boron thin film grown thereon and Ni wire brought into contact with the Cu substrate are prepared. The other part is configured in the same manner as the examples in the aforementioned case of the LiCl-KC1-Li₃N type molten salt. The temperature of the electrolytic bath was set to 350°C. The electrolysis was performed for four hours with the anode potential set to 1.5 V.

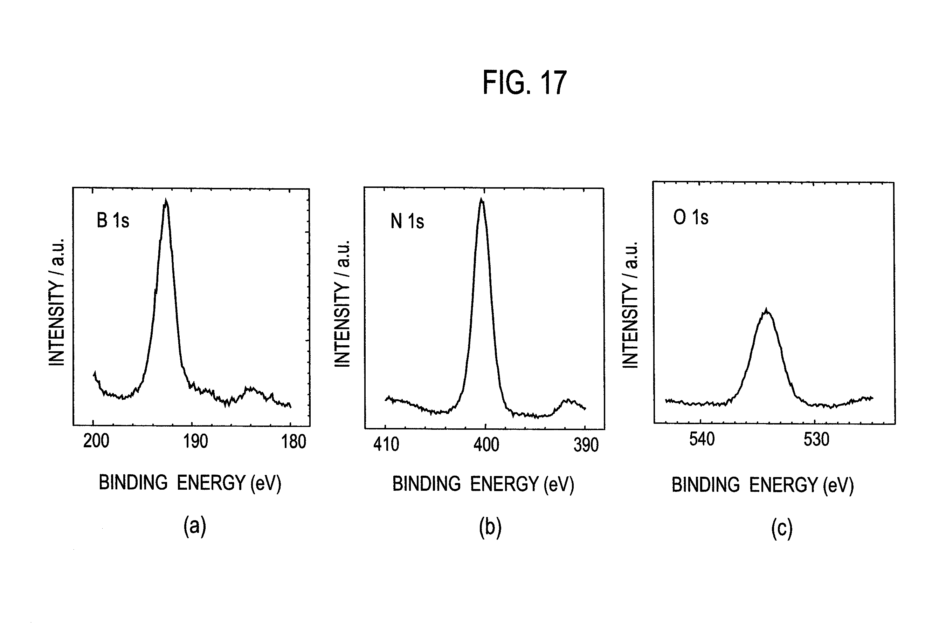

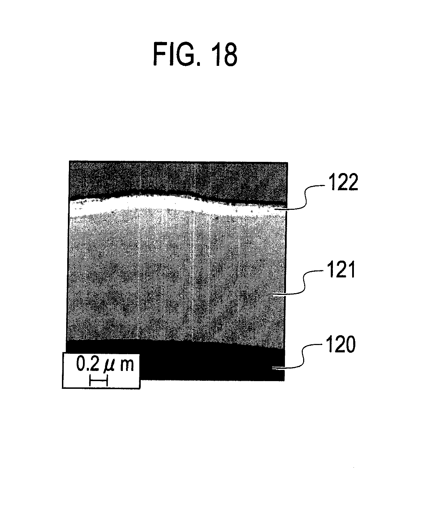

Fig. 17 shows a measurement result of the XPS spectrum of the boron nitride thin film formed on the processing object. Fig. 18 shows a TEM image of a cross-section of the processing object with the boron nitride thin film formed thereon. The cross-sectional image of Fig. 18 shows a structure where a boron thin film 121 is laid on a copper substrate 120 and a boron nitride thin film 122 is formed on the boron thin film 121. The boron thin film 121 had a thickness of 1.5 to 3.5 µm, and the boron nitride thin film 122 had a thickness of about 150 nm. Fig. 17(a) shows a measurement result of the XPS spectrum of Is orbital of boron (B) ; Fig. 17 (b) shows a measurement result of the XPS spectrum of 1s orbital of nitrogen (N) ; and Fig. 17 (c) shows a measurement result of the XPS spectrum of Is orbital of oxygen (O). In such a manner, in the process of fabricating the boron nitride thin film, a small amount of impurities such as an oxygen component is sometimes contained as well as nitrogen and boron components. In addition to oxygen, a small amount of impurities such as carbon, silicon, and aluminum is sometimes mixed. However, the existence of an element in the boron nitride thin film other than boron and nitrogen will not matter if the boron nitride thin film has features expected as a boron nitride thin film, including the resistance to thermal shock, high temperature stability, high hardness, high heat conduction, high insulation, and the like.

As described above, according to the method for forming a nitride thin film according to the embodiment of the present invention, a nitride thin film as an insulator is electrochemically formed on the surface of the substrate. The nitride ions are oxidized on the boron member of the processing object 10 to form adsorbed nitrogen (N_{ads}), which diffuse into the boron member. In other words, nitrogen penetrates from the surface of the boron member into the boron member, thus forming a continuous gradient of the concentration of nitrogen within the boron member. Specifically, the concentration of nitrogen is high in the surface of the boron member and gradually decreases in the thickness direction of the boron member. This strengthens the connection at the interface between the boron member and the boron nitride film.

By the CVD or PVD process, the nitride thin film is formed on the substrate by deposition of a compound. For this reason, stress is caused in the entire nitride thin film, and the nitride thin film easily peels off from the substrate. On the other hand, by the MSEP, nitrogen diffuses from the surface of the processing object to form a nitride thin film having a gradient composition. It is therefore possible to provide a method for forming a nitride thin film, by which a nitride thin film having good adhesion to the substrate can be formed.

The boron nitride thin film is excellent in the resistance to thermal shock and high temperature stability and has features including high hardness, high heat conduction, and high insulation. Accordingly, the boron nitride thin film 11 can be applied in various fields of industry by controlling the thickness of the boron nitride thin film 11 through the electrolytic time. For example, the boron nitride thin film 11 is applicable to carbide tools, high temperature furnace materials, high temperature electric insulators, molten metal/glass treatment jigs/crucibles, thermal neutron absorption materials, IC/transistor heat radiating insulators, and infrared/microwave polarizers/transmitting materials.

The method for forming the boron nitride thin film 11 shown in Fig. 8 is a process using the molten salt 20 at the liquid phase and requires no vacuum chamber. In short, the method requires no high vacuum state which is essential for the thin film deposition by the vapor-phase reaction. Accordingly, it is possible to reduce the cost required to form the boron nitride thin film 11. Furthermore, the boron nitride thin film 11 can be formed for large-scale structures and structures of complicated shape.

In the explanation of the aforementioned embodiment, the case of forming the boron nitride thin film 11 is described. However, the embodiment is applicable to formation of other nitride thin films having insulation equal to that of the boron nitride films.

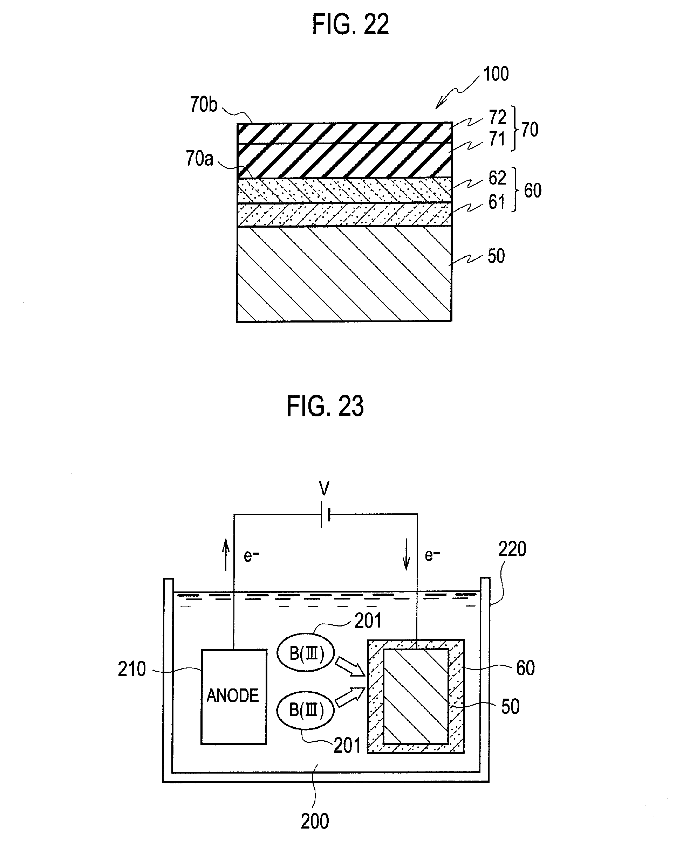

Next, a third embodiment will be described. The third embodiment relates to a multilayer structure. As shown in Fig. 22, a multilayer structure 100 according to the third embodiment includes: a substrate 50 mainly composed of a metal; a compound layer 61 composed of a compound of a metal contained in the substrate 50 and a conductor or semiconductor and provided on the substrate 50; and a nitride insulator layer 70 composed of a nitride of the conductor or semiconductor and provided above the compound layer 61. The multilayer structure 100 shown in Fig. 22 further includes an intermediate layer 62 which is provided between the compound layer 61 and the nitride insulator layer 70 and is composed of the conductor or semiconductor which is a component of the compound layer 61. The concentration of nitrogen of the nitride insulator layer 70 gradually increases starting from a first primary surface 70a in contact with the intermediate layer 62 on the compound layer 61 side in the thickness direction of the nitride insulator layer 70.

The intermediate layer 62 is composed of the conductor such as a metal or semiconductor and contains at least one of aluminum, boron, and silicon (Si). For example, when the intermediate layer 62 is composed of a boron film, the nitride insulator layer 70 is composed of boron nitride (BN).

The nitride insulator layer 70 includes an insulating nitrided layer 72 and a gradient nitrogen concentration layer 71 as shown in Fig. 22. The insulating nitrided layer 72 is an insulator, and the gradient nitrogen concentration layer 71 is a layer having a gradient in the concentration of nitrogen in the thickness direction of the gradient nitrogen concentration layer 71. The concentration of nitrogen in the gradient nitrogen concentration layer 71 is the highest in the region in contact with the insulating nitrided layer 72 and gradually decreases in the thickness direction.

It is described for the convenience that the concentration of nitrogen has a gradient, but to be accurate, the "activity" of nitrogen has a gradient. The activity of nitrogen is difficult to confirm by a general analysis apparatus and is therefore replaced with the concentration of nitrogen which can be analyzed and evaluated. In a nitride with a small nitrogen composition width or the like, even if the activity of nitrogen has a large gradient, the concentration of nitrogen has a very small gradient in some cases.

The substrate 50 is composed of a metal or an alloy capable of forming a compound with the conductor or semiconductor constituting the intermediate layer 62. Examples of the usable material of the substrate 50 are aluminum (Al), scandium (Sc), titanium (Ti), vanadium (V), chromium (Cr), copper (Cu), manganese (Mn), molybdenum (Mo), yttrium (Y), zirconium (Zr), niobium (Nb), tantalum (Ta), tungsten (W), hafnium (Hf), iron (Fe), iridium (Ir), palladium (Pd), platinum (Pt), ruthenium (Ru), cobalt (Co), nickel (Ni), calcium (Ca), strontium (Sr), barium (Ba), lantern (La), and cerium (Ce). If the intermediate layer 62 is composed of a boron (B) film, for example, the substrate 50 is made of a material containing an element capable of forming a compound with boron (Al, Co, Cr, Cu, Fe, Ir, Mn, Mo, Nb, Ni, Pd, Pt, Ru, Ta, Ti, V, W, Y, Zr and the like) . The compound layer 61 having a gradient composition is therefore formed between the boron thin film and the substrate material, thus increasing the adhesion between the intermediate layer 62 and the substrate 50.

Hereinafter, an example of the method of manufacturing the multilayer structure 100 shown in Fig. 22 will be described. The method of manufacturing a multilayer structure described below is just an example, however, and it is obvious that the present invention can be implemented by other various manufacturing methods including modifications thereof.

First, with reference to Fig. 23, a description will be given of an example of the method for forming the intermediate layer 62 on the substrate 50 to use the intermediate layer 62 as a precursor of the nitride insulator layer 70. For such a method, the molten salt electrochemical process (MSEP) can be applied. Fig. 23 is a diagram illustrating the method for forming the layer of a conductor or semiconductor by the thin film forming method using the MSEP.

Hereinafter, as an example, the description will be given of a case where the substrate 50 is a nickel (Ni) substrate and the intermediate layer 62 is a boron film. For example, the substrate 50 is composed of a nickel plate. Molten salt 200 is a Na₂B₄O₇-NaCl (80:20 wit%) molten salt. An anode 210 is composed of glassy carbon.

As shown in Fig. 23, the substrate 50 and the anode 210 are immersed in the molten salt 200 filled in the electrolytic vessel 220. The temperature of the molten salt 200 is set to 800°C to 900°C, for example, 800°C.

Thereafter, electrolytic voltage V is applied across the anode 210 and the substrate 50 serving as the cathode. As a result, by the molten salt electrolysis in the molten salt in which ions 201 containing boron (B(III)) are dissolved, boron ions are reduced and deposited on the surface of the substrate 50 to form a boron thin film as the intermediate layer 62 on the surface of the substrate 50. The substrate 50 is taken out from the electrolytic vessel 220 and then rinsed to remove the residual salt.

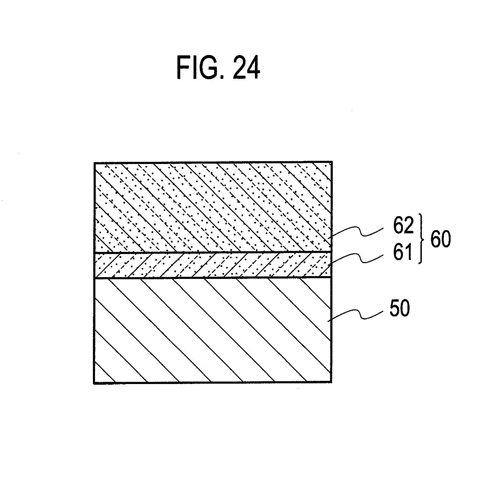

Using a metal or the like capable of forming a compound with the element constituting the intermediate layer 62 in the substrate 50 allows the compound layer 61 to be formed between the intermediate layer 62 and the substrate 50. In the aforementioned example, nickel boride as a compound of boron and nickel is formed as the compound layer 61. As shown in Fig. 24, the compound layer 61 and the intermediate layer 62 are thus laid on the substrate 50.

The intermediate layer 62 is a film deposited on the surface of the substrate 50 by the electrochemical reaction and is therefore uniform and dense. Moreover, the formation of the compound layer 61 at the interface between the substrate 50 and the intermediate layer 62 is accelerated along with the electrochemical reaction. This strengthens the connection at the interface between the substrate 50 and the intermediate layer 62, thus increasing the adhesion between the substrate 50 and the intermediate layer 62. Herein, in order for the intermediate layer 62 to be composed of a boron thin film or a boron compound thin film, it is desirable to perform the pulse electrolysis using the MSEP of Fig. 1 explained in the first embodiment.

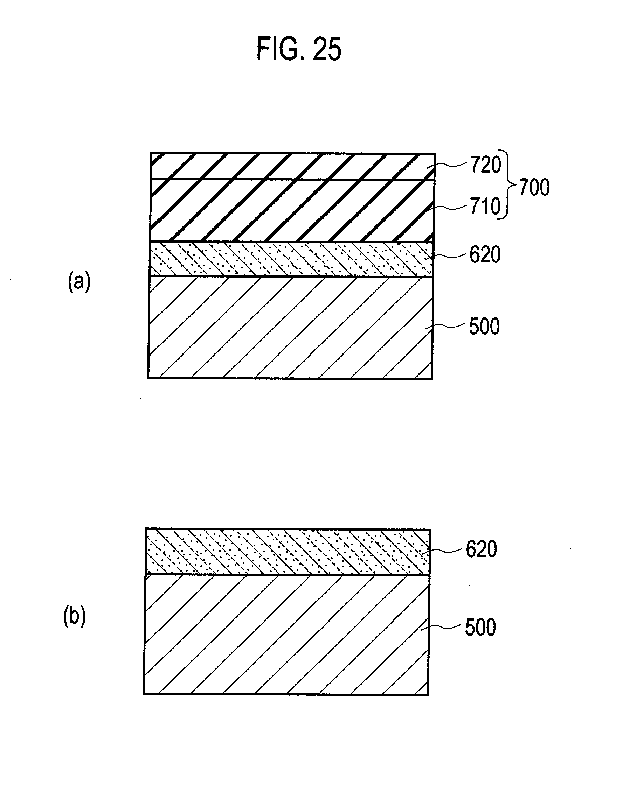

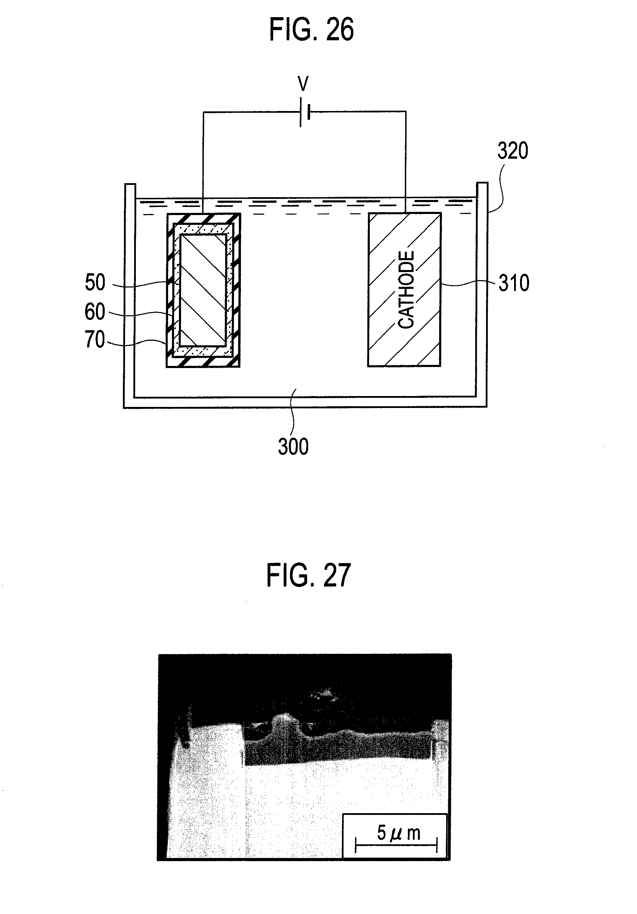

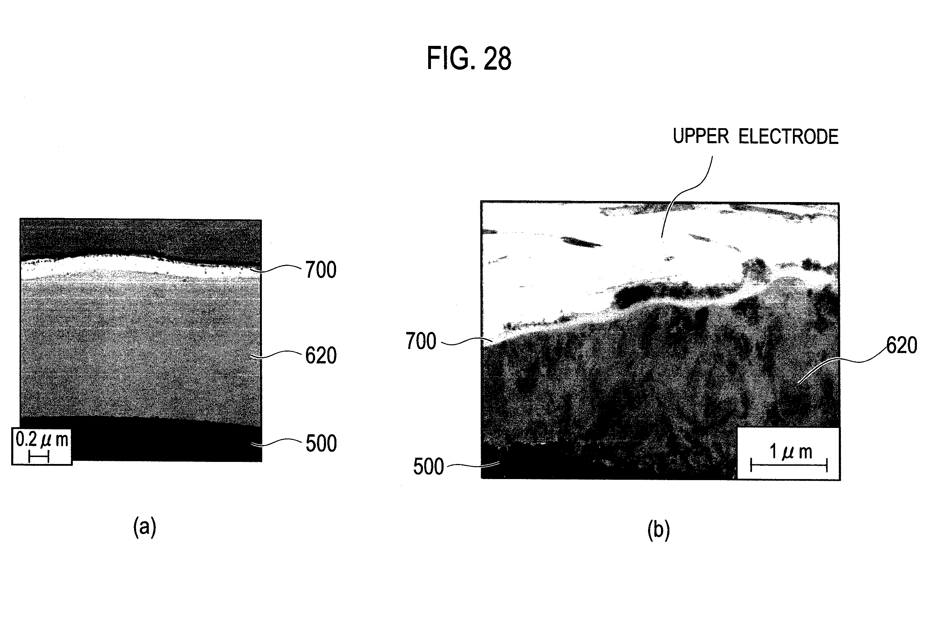

Here, as shown in Fig. 25, the compound layer 61 is actually formed to be very thin and cannot be confirmed in many cases. As shown in Fig. 25(b), substantially, an intermediate layer 620 is fabricated on a substrate 500. For example, the pulse electrolysis is performed in the electrolysis bath set to a temperature of 700°C using the substrate 500 of Fig. 25(b) made of copper (Cu) and the molten salt 200 composed of LiCl-KCl-NaBO₂. In this case, as shown in Fig. 25(a), the intermediate layer 620 is formed on the substrate 500. By a later-described method, a nitride insulator layer700 including an insulating nitrided layer 720 and a gradient nitrogen concentration layer 710 is formed on the intermediate layer 620. Fig. 27 shows a TEM image of a cross-section thereof. Fig. 28 (a) shows an enlarged photograph thereof. In this case, the nitride insulator layer 700 is composed of boron nitride.

Meanwhile, Fig. 28(b) shows an example where the intermediate layer 620 is composed of a boron compound. The boron compound can be formed by applying the examples explained in Figs. 5 and 6 in the first embodiment. The pulse electrolysis is performed in the electrolytic bath set to a temperature of 700°C using the substrate 500 made of tantalum (Ta) and the molten salt 200 composed of NaCl-CaCl₂ eutectic salt (32.4:67. 6 mol%) added with 10 mol% of NaBO₂. The conditions of the pulse electrolysis are as described above. In such a manner, a calcium boride (CaB₆) can be formed on the substrate 500 as the intermediate layer 620. On the intermediate layer 620, the nitride insulator layer 700 is formed by a later-described method. In this case, the nitride insulator layer 700 is composed of boron nitride.

Next, with reference to Figs. 8 and 26, a description will be given of an example of the method for forming the nitride insulator layer 70 using the intermediate layer 62 formed on the substrate 50 as a precursor. First, the configuration of Fig. 8 according to the second embodiment is basically used. Fig. 26 shows a state where the nitride insulator layer 70 is formed by the thin film forming method using the MSEP of Fig. 8. By molten salt electrolysis using the substrate 50 as the anode in the molten salt in which nitride ions (N³⁻) are dissolved, the nitride ions are oxidized and reacted with a part of the intermediate layer 62 on the substrate 50 including the intermediate layer 62 and form the nitride insulator layer 70. In some cases, the intermediate layer 62 is made very thin because of the progress of the nitriding reaction and is difficult to distinguish.

Preferably, molten salt 300 is composed of an alkaline metal halide or alkaline earth metal halide. As the molten salt300, for example, LiCl-KC1-Li₃N molten salt composed of lithium chloride-potassium chloride (LiCl-KCl) eutectic salt (51:49 mol%) added with lithium nitride (Li₃N) (1 mol%) is suitable.

In the cathode 310, ions of the alkaline metal or alkaline earth metal of the molten salt component as the electrolytic bath are electrochemically reduced. For example, in the case where the molten salt 300 is composed of a LiCl-KCl-Li₃N molten salt, Li⁺ is reduced for deposition of metal Li. For this reason, the cathode 310 is preferably made of metal Al capable of forming an alloy with Li, for example.

Hereinafter, a description will be given of an example where the substrate 50 and intermediate layer 62 are composed of an Ni substrate and a boron film, respectively, and the nitride insulator film 70 is formed using the boron film as the precursor. It is assumed that the molten salt 300 is composed of a LiCl-KCl-Li₃N molten salt and the cathode 310 is composed of a metal Al plate.

As shown in Fig. 26, the substrate 50 which is provided with the intermediate layer 62 used as a precursor, and the cathode 310 are immersed in the molten salt 300 filled in the electrolytic vessel 320. The temperature of the molten salt 300 is set to 300°C to 500°C, for example 450°C.

Next, electrolysis voltage V set to a predetermined voltage value is applied across the substrate 50 serving as the anode and the cathode 310. As a result, as shown in Fig. 26, the nitride insulator layer 70 of a boron nitride thin film is formed on the surface of the intermediate layer 62 by the MSEP. The substrate 50 with the nitride insulator layer 70 formed on the surface thereof is taken out from the electrolysis bath 320 and then rinsed to remove residual salt.

In the nitride thin film forming method using the MSEP shown in Fig. 26, the anode potential needs to be about -0.3 V to 3.3 V on a basis of the potential of nitrogen gas of 1 atmosphere. The anode potential is set to preferably +0.2 V to 2.0 V, and for example, 0.6 V. The electrolysis voltage V at this time is about 1.0 V when the cathode reaction is Li deposition.

The period of time when the electrolysis voltage V is applied (electrolysis time) is set to about 30 minutes, for example. Specifically, the electrolytic time is set to about 3 to 120 minutes depending on the desired thickness of the nitride insulator layer 70.

As described above, the intermediate layer 62 deposited on the substrate 50 by the method explained with reference to Fig. 23 or the like is electrochemically reacted with nitride ions (N³⁻) in the molten salt 300 to act as a precursor, thus forming the nitride insulator layer 70. The nitride ions are oxidized on the surface of the intermediate layer 62 to form adsorbed nitrogen (N_{ads}), which diffuse into the intermediate layer 62, so that nitrogen continuously penetrates into the intermediate layer 62. The intermediate layer 62 is thus nitrided from the surface in contact with the molten salt 300. Accordingly, there is a gradient in the concentration of nitrogen in the nitride insulating layer 70.

Specifically, in the nitride insulator layer 70, the concentration of nitrogen is high in a second primary surface 70b in contact with the molten salt 300 and gradually decreases in the thickness direction. At the interface between the intermediate layer 62 and the nitride insulator layer 70, there is a continuous composition gradient as described above. This allows the physical properties including the thermal expansion coefficient and the like to gradually change, thus reducing residual stress. The adhesion between the intermediate layer 62 and the nitride insulator layer 70 is therefore improved.

According to the method of manufacturing the multilayer structure 100 according to the embodiments of the present invention as described above, by applying the electrochemical reaction in the molten salt, it is possible to manufacture the multilayer structure 100 with the connection at the interface between the substrate 50 and the intermediate layer 62 and the connection at the interface between the intermediate layer 62 and the nitride insulator layer 70 individually strengthened. The method of manufacturing the multilayer structure 100 is not limited, but preferably, the multilayer structure 100 is manufactured by the MSEP.

In the aforementioned method of manufacturing the multilayer structure 100, the multilayer structure 100 is manufactured by liquid phase reaction (molten salt) instead of vapor phase reaction. Accordingly, the manufacturing method requires no vacuum chamber, which is required by film formation by the vapor-phase reaction. This can prevent an increase in manufacturing cost of the multilayer structure 100.

The reactor of the liquid-phase reaction can be easily scaled up, and accordingly, the multilayer structure 100 of large size can be manufactured. Moreover, liquid can uniformly cover a sterically complicated structure and allows current to be applied irrespective of the shape of the electrode. According to the present invention implementing electrochemical reaction in the molten salt, the multilayer structure 100 of a complicated shape, on which it is difficult to form a film, can be subjected to film formation.

The nitride insulator is an insulator which has high hardness, excellent abrasion resistance, and the like and exists stably even at high temperature. Accordingly, the multilayer structure 100 including the nitride insulator layer 70 provided on the substrate 50 of metal or the like is applicable to, for example, the fields of surface treatment for cutting tools, mechanical parts, and the like and the fields of electronic devices where the structure is used for insulating films within integrated circuits and dielectrics of capacitors.

As described above, in the multilayer structure 100 according to the third embodiment, the nitrogen concentration of the nitride insulator layer 30 continuously changes in the thickness direction to improve the adhesion between the intermediate layer 62 and the nitride insulator layer 70. Thus, according to the multilayer structure 100 shown in Fig. 22, it is possible to provide a multilayer structure including the nitride insulator layer 70 having good adhesion with the substrate 50.

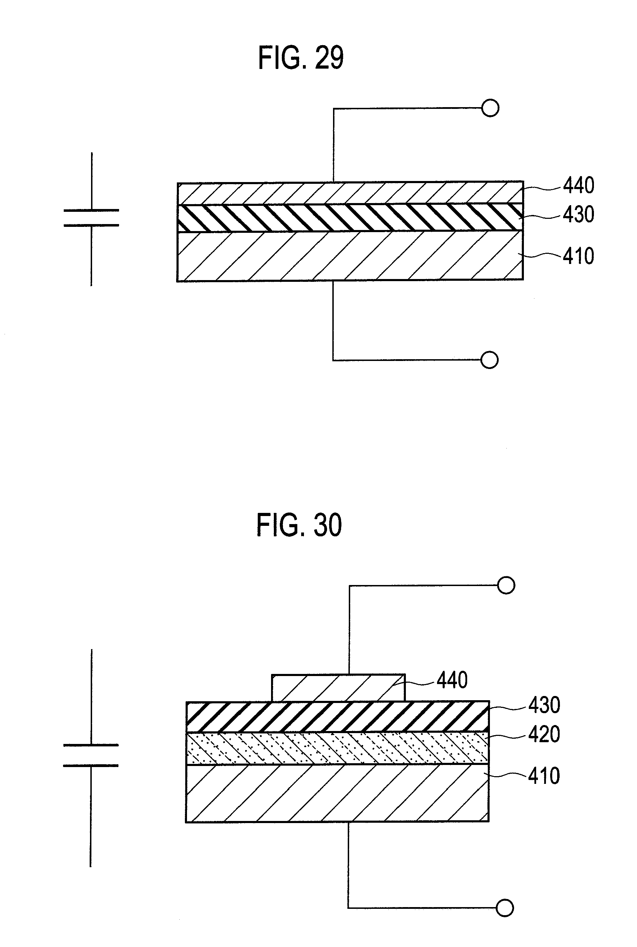

Next, with reference to the drawings, a description will be given of a fourth embodiment in which the multilayer structure according to the third embodiment is applied to a specific device. In the fourth embodiment, a capacitor is composed using the multilayer structure according to the third embodiment. Fig. 29 shows a schematic configuration example of the capacitor. A first electrode 410 and a second electrode 440 are opposed to each other, and between the first and second electrodes 410 and 440, a nitride insulating film 430 is formed. In Fig. 29, a circuit symbol of a capacitor is shown to the left. Herein, a description will be given corresponding to the multilayer structure of Fig. 22. The substrate 50 corresponds to any one of the first and second electrodes 410 and 440, and the nitride insulator layer 70 corresponds to the nitride insulating film 430.

The material of the first electrode 410 can be a metal, an alloy, a metal compound, a semiconductor, or the like. The first electrode 410 can be made of a material including one or more of elements Al (aluminum), B (boron), Si (silicon), and C (carbon), for example. The second electrode 3 is composed of Ag (silver) or the like usually often used. The nitride insulating film 430 constitutes a dielectric of the capacitor of Fig. 29. The nitride insulating film 430 is formed by nitriding the surface of the processing object by the electrochemical reaction. Herein, the processing object to be subjected to nitriding is made of a material containing one or more of elements Al, B, Si, and C.

Meanwhile, the nitride insulating film 430 may be formed by nitriding a processing object different from the material of the first electrode 410 and may be formed by nitriding a part of the electrode material of the first electrode 410. In this case, when the material of the first electrode is any one of Al, B, Si, and C, for example, the nitride insulating film 430 is composed of AlN, BN, Si₃N₄, and C₃N₄, respectively. The nitride compound is not limited to the above nitride compounds, however.

The nitride insulating film 430 is formed so that the nitrogen component has a composition gradient in the direction toward the first electrode 410 or second electrode 440. For example, the composition gradient can be formed, so that the nitrogen component of the nitride insulating film 430 gradually increases from the second electrode 440 toward the first electrode 410. Meanwhile, the composition gradient can be formed, so that the nitrogen component of the nitride insulating film 430 gradually decreases from the second electrode 440 toward the first electrode 410. In such a manner, fabrication of the composition gradient of the nitrogen component in the nitride insulating film 430 can be achieved by a nitriding method by electrochemical reaction described below. If the electrochemical reaction is used, nitriding reaction proceeds in part of the processing object allowing current to pass easily, that is, the part with poor insulation at first, thus improving the insulation. Moreover, performing the nitriding reaction for a certain period of time makes it possible to form a very dense dielectric with the nitrogen component having a composition gradient toward the electrode.

The capacitor of the present invention can be configured as shown in Fig. 30. The first and second electrodes 410 and 440 are opposed to each other, and an intermediate layer 420 and nitride insulating film 430 are formed between the first and second electrodes 410 and 440. Herein, the intermediate layer 62 of the multilayer structure of Fig. 22 corresponds to the intermediate layer 420 of the capacitor. At this time, the intermediate layer 420 plays a role of transporting charges from the first electrode 410 to the nitride insulating film 430 corresponding to the dielectric.

The electrolysis apparatus performing nitriding through the electrochemical reaction includes the configuration of Figs. 8 to 11 described in the second embodiment. In Fig. 8, the processing object 10 is connected to the DC power supply as an anode, and the other end of the DC power supply is connected to the cathode 30. In the electrolytic vessel, the charged salt is melted, and the electrolytic vessel is filled with the molten salt electrolytic bath 20 including nitride ions. Herein, when direct current is applied between the processing object 10 and the cathode 30 placed in the molten salt electrolytic bath 20, oxidation reaction occurs on the surface of the processing object 10, and nitriding starts from the surface of the processing object 10.

If the nitride to be formed is an insulator such as boron nitride or aluminum nitride, it is difficult to cause the electrochemical reaction to continuously progress.

In this respect, the anode is configured as shown in Fig. 10, for example. In Fig. 10(a), the conducting material 32 is brought into contact with the side of a processing object 31 serving as the anode where the nitride is formed. This can promote the oxidation reaction on the surface of the processing object 31, and a part of the processing object 31 is then nitrided to form a nitride insulating film. In Fig. 11, when a processing object 41 is thin like the boron thin film, the resistance thereof in the thickness direction is low. Accordingly, the conducting material 42 is brought into contact with the side of the processing object 41 opposite to the side where the nitride is formed, thus facilitating the progress of the oxidation reaction.

The electrostatic capacitance of the capacitor is in proportion to the area of the electrode of the capacitor and is in inverse proportion to the distance between the electrodes. It is therefore desirable that the nitride insulating film 430 formed as a dielectric is thin and the first and second electrodes 410 and 440 have large surface areas. Accordingly, the surface enlargement to enlarge the surface area is performed so as to increase the capacitance of the capacitor.

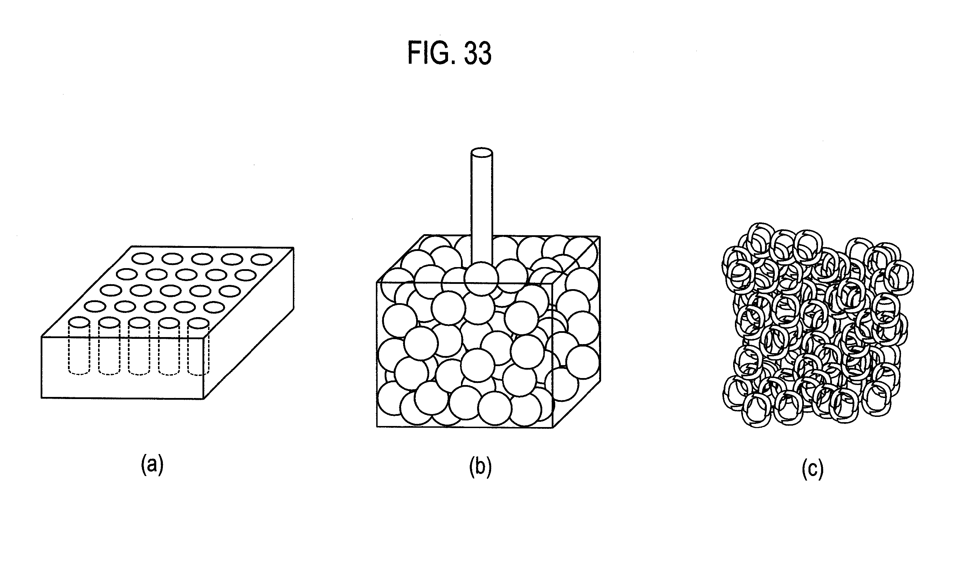

Fig. 33 schematically shows examples of the surface enlargement treatment. It is possible to perform surface enlargement treatment other than those shown in the drawing. Fig 33(a) shows a trench structure, which is a metallic plate or the like with a large number of pores formed therein, for example. By forming a large number of pores, the surface area is made larger than that of a simple plate. Fig. 33(b) shows a sintered structure, which is a structure obtained by sintering and aggregating small particles. By aggregating small spherical particles, the surface area is made larger than that of a rectangular cube. Fig. 33 (c) shows porous metal, in which there are a large number of holes formed for enlargement of the surface area. Herein, the surface area of a practical capacitor is preferably 0.02 m² to 2.0 m².

Next, a description will be given of a production example of the capacitor of Fig. 29.

### (Example 1)

In this example, the electrode structure in the electrolytic vessel employs the type of Fig. 10(a). The processing object 10 provided as the anode was made of boron (B). The processing object 10 included the first electrode 410, and a part of the electrode material was nitrided. The boron had a purity of 99.95% and had a plate shape of 20×10×2.5 mm. The prepared boron plate was composed of sintered fine particles as shown in Fig. 33(b) and had a larger surface area than a simple plate. The molten salt for nitriding was LiCl-KCl eutectic salt (51:49 mol%). The molten salt was maintained at 450°C, and the molten salt electrolytic bath contained 1 mol% of Li₃N in the molten salt as a source of nitrogen ions (N³⁻) was used.

The electrolytic nitriding was carried out by the following process. First, Ni wire was attached to the processing object (boron plate) as the conducting material 32, and the processing object was immersed in the molten salt. Next, the potential was set by a potentiostat to a potential of +0.6 V on the basis of the potential of nitrogen gas of 1 atmosphere, for example, so that nitride ions (N³⁻) in the molten salt electrolytic bath causes oxidation reaction on the processing object. The electrolysis was performed for 30 minutes. After the electrolytic nitriding, the boron plate with the nitride film formed thereon was rinsed to remove residual salt.

Subsequently, a counter electrode (the second electrode 440) was formed. First, the Ni wire was detached from the processing object with the nitride film formed thereon, and the part connected to the Ni wire was polished to expose a part of the boron plate used as the anode. This is for using the boron plate serving as the anode as the first electrode 410 of the capacitor.

The aforementioned method is just an example therefor and will not limit the present invention. Other methods are, for example, forming a substance as a part of the anode for masking and removing the masking material after the nitriding, the substance stably existing at the reaction temperature in the molten salt and does not affect the nitriding reaction; and connecting the anode to a wire or the like composed of the same material as the anode material to form a pull-out portion and removing the nitride film at the pull-out portion after the electrolytic nitriding to expose the anode material.

In order to form the second electrode of the capacitor, Ag paste was applied to the processing object after the electrolytic nitriding to be hardened. In this example, a normal Ag paste was applied using a dispenser. As for the formation of the second electrode, the present invention employs a conventional technique. Accordingly, in addition to the aforementioned method, some methods of forming polycrystalline Si or W by CVD, performing electroless plating, and the like can be employed. At this time, desirably, the second electrode is formed so as to match the first electrode having a large surface area. The structure thus formed includes a capacitor structure (electrode-dielectric-electrode).

In studies on the characteristics of the thus fabricated capacitors at high temperature, the capacitors were not degraded in characteristics and stably operated even if the environment temperature was increased to 250°C. Moreover, the nitride insulating film formed was mainly composed of B-N bonds and was amorphous.

### (Example 2)

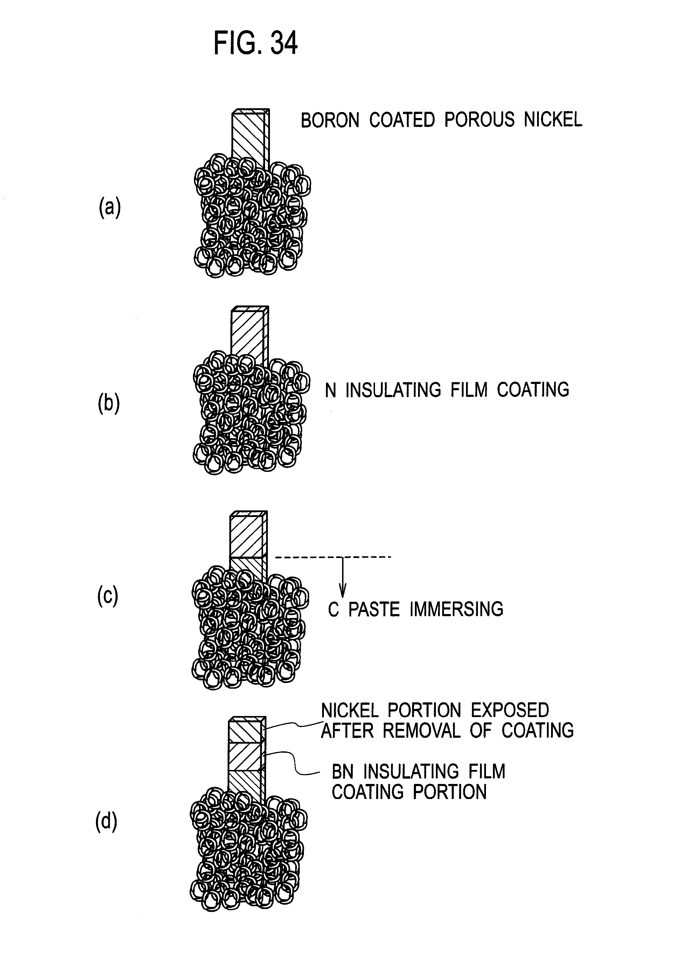

An example of using the porous metal shown in Fig. 33 (c) as the base material subjected to surface enlargement is shown. A porous Ni base material coated with a boron thin film (Fig. 34(a)) was used as the processing object. The electrode structure in the electrolytic vessels was the electrode configuration of Fig. 33(b). Coating of the boron thin film was achieved by the technique disclosed in the first embodiment of the present invention.

The electrolytic nitriding was carried out by the following process. The molten salt was a LiCl-KCl eutectic salt (51:49 mol%) . The molten salt was maintained at 450°C, and the molten salt electrolytic bath added with 1 mol% of Li₃N was used. The processing object was immersed in the molten salt. Next, the potential was set by a potentiostat to a potential of +0.6 V on the basis of the potential of nitrogen gas of 1 atmosphere, for example, so that nitride ions (N³⁻) in the molten salt electrolytic bath causes oxidation reaction on the processing obj ect. The electrolysis was performed until the boron nitride film was formed with a thickness of about 1 µm (Fig. 34(b)). After the electrolytic nitriding, the porous Ni base material with the boron nitride film formed thereon was rinsed to remove residual salt.

Subsequently, a counter electrode (the second electrode 440) was formed. In order to form the second electrode of the capacitor, as shown in Fig. 34(c), the porous Ni base material was immersed in C paste to a predetermined depth and then maintained for 60 minutes at a temperature of 150°C for hardening. Thereafter, a part of the boron nitride film in the part where C was not formed was removed to expose the first electrode (nickel part) of Fig. 34 (d). Herein, the conventional technique was used to form the second electrode in the present invention. Accordingly, similarly to the explanation of Example 1, the second electrode can be manufactured by the other methods.

The capacitor of Fig. 30 can be fabricated by the same method as that of the aforementioned example. The method of fabricating the capacitor of Fig. 30 is a little different from that of the above example, however, because of the intermediate layer 420. As the first electrode 410, a metal substrate (Ta) is prepared. For example, the metal substrate having a size of 20×10 mm and a thickness of 0.5 mm was used. The MSEP was used so that the intermediate layer 420 was composed of a boron thin film (B). The pulse electrolysis was performed at a bath temperature of 700°C using the molten salt of LiCl-NaBO₂ as the conditions. After the intermediate layer 420 was fabricated, a boron nitride thin film was formed by the MSEP as the nitride insulating film 430. LiCl-KC1-CsCl-Li₃N was used as the molten salt, and electrolysis was performed at a bath temperature of 350°C at an electrolytic potential of 2.0 V (vs. Ag+/Ag) for 4.0 hours as the conditions. After the boron nitride thin film was formed, an upper electrode (nickel Ni) corresponding to the second electrode 440 was formed by sputtering.

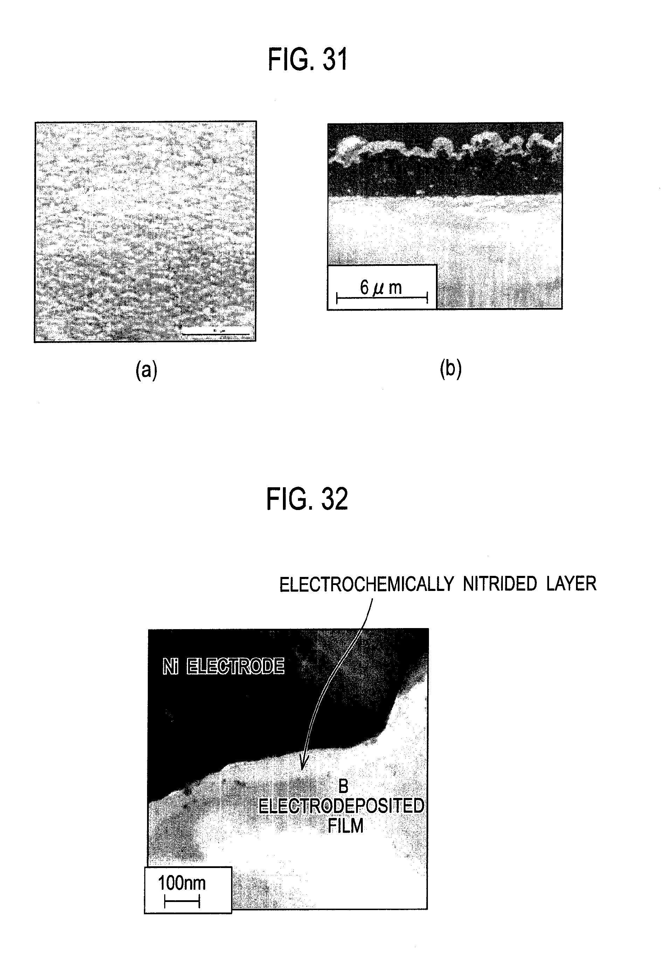

Fig. 31(a) shows an SEM image of the top surface of the capacitor with the upper electrode formed as described above, and Fig. 31(b) shows an SEM image of a cross-section thereof. In addition, Fig. 32 shows a TEM image of a cross-section. As shown in Fig. 31(a), a lot of roughness is formed, and the surface area is increased. As known from these photograph images, the electrostatic capacitance of the capacitor can be increased by fabricating a complicated structure to increase the surface area. This example had a capacitance per unit area 10 times larger than that of the conventional one (3.2 nF per ϕ1 mm). The rate of change of the capacitance is within ±10% in a temperature range from room temperatures to 300°C.

Hereinabove, it is obvious that the present invention includes various embodiments not described herein. Accordingly, the technical scope of the present invention should be defined by the features of the invention according to claims proper from the above explanation.

### INDUSTRIAL APPLICABILITY.

The method for forming a boron-containing thin film of the present invention can be used for coating of a fusion reactor wall (boronization). Moreover, if a boron single-crystal thin film could be formed, the method can be applied to superconductive materials, ferromagnetic materials, and the like. In addition, from boron thin films, boron compound thin films such as boron carbide thin films and boron nitride thin films can be obtained. These materials are thought to be applied to the following usages. The boron carbide thin films can be used as thermal neutron absorption materials, cutting materials, abrasives, and the like. The boron nitride thin films can be used for carbide tool materials, high temperature furnace materials, high temperature electric insulators, molten metal/glass treatment jigs/crucibles, thermal neutron absorption materials, IC/transistor heat radiating insulators, infrared/microwave polarizers/transmitting materials, and the like. The multilayer structure of the present invention can be applied to the fields of surface treatment for cutting tools, mechanical parts, and the like and the field of electronic devices where the structure is used for insulating films of integrated circuits and dielectrics of capacitors.

### EXPLANATION OF REFERENCE NUMERALS

- 1:: ANODE
- 2 :: PROCESSING OBJECT
- 3:: BORON-CONTAINING THIN FILM
- 4:: ELECTROLYTIC VESSEL
- 5:: MOLTEN SALT ELECTROLYTIC BATH
- 6:: VARIABLE POWER SUPPLY
- 21:: ANODE
- 22:: CATHODE
- 23:: BORON
- 24:: ELECTROLYTIC VESSEL
- 25:: MOLTEN SALT
- 26:: DC POWER SUPPLY

## Claims

1. A method for forming a boron-containing thin film comprising the steps of:
placing a processing object as a cathode in a molten salt containing ions containing boron;
performing electrolysis by applying current in the molten salt from a power supply; and
forming a boron thin film or boron compound thin film at least in a part of a surface of the processing object by the electrolysis step, wherein
a voltage or current waveform of the power supply is caused to change in the electrolysis step.

2. The method for forming a boron-containing thin film according to claim 1, wherein the voltage or current waveform of the power supply in the electrolysis step is pulse waveform.

3. The method for forming a boron-containing thin film according to claim 1 or 2, wherein the processing object is composed of an element capable of forming an alloy with boron.

4. The method for forming a boron-containing thin film according to any one of claims 1 to 3, wherein
at least a part of an anode placed in the molten salt contains boron, and
ions containing boron are supplied into the molten salt by anode reaction.

5. A method for forming a boron-containing thin film, comprising the steps of:
preparing a processing object including a substrate and also containing boron; and
performing molten salt electrolysis using the processing object as an anode in a molten salt in which nitride ions are dissolved and then oxidizing the nitride ions on the processing object to form a boron nitride thin film.

6. The method for forming a boron-containing thin film according to claim 5, wherein the boron nitride thin film is formed in the surface of the substrate.

7. The method for forming a boron-containing thin film according to claim 5 or 6, wherein
the substrate contains boron, and the processing object is obtained by bringing a conducting material into contact with the substrate.

8. The method for forming a boron-containing thin film according to claim 5, wherein the boron nitride thin film is formed in the surface of the processing object.

9. The method for forming a boron-containing thin film according to claim 5 or 8, wherein the processing object includes a boron thin film or boron-compound thin film formed in the surface of the substrate composed of a conducting material.

10. The method for forming a boron-containing thin film according to any one of claims 5 to 9, wherein the molten salt is composed of an alkaline metal halide or an alkaline earth metal halide.

11. The method for forming a boron-containing thin film according to claim 10, wherein the molten salt is a LiCl-KC1 eutectic salt or LiCl-KC1-CsCl eutectic salt.

12. The method for forming a boron-containing thin film according to claim 7 or 9, wherein current is applied to the conducting material to oxidize the nitride ions.

13. A multilayer structure, comprising:
a substrate mainly composed of metal; and
a nitride insulator layer provided above the substrate, wherein the nitride insulator layer has a nitrogen concentration gradually increasing in a thickness direction of the nitride insulator layer starting from a first primary surface thereof on the substrate side.

14. The multilayer structure according to claim 13, further comprising an intermediate layer which is provided between the substrate and the nitride insulator layer and is composed of a conductor or a semiconductor.

15. The multilayer structure according to claim 13 or 14, wherein the nitride insulator layer includes an insulating nitrided layer and a gradient nitrogen concentration layer.

16. The multilayer structure according to claim 14 or 15, wherein the intermediate layer contains at least any one of aluminum, boron, and silicon.

17. The multilayer structure according to any one of claims 14 to 16, wherein the nitride insulator layer is obtained by nitriding a part of the intermediate layer.

18. The multilayer structure according to any one of claims 14 to 17, wherein the nitride insulator layer is obtained by nitriding a surface layer of the intermediate layer.

19. The multilayer structure according to any one of claims 14 to 18, wherein the intermediate layer is a boron film or a boron compound thin film.

20. The multilayer structure according to any one of claims 13 to 19, wherein the substrate is made of a metal capable of forming an alloy with boron.

21. The multilayer structure according to claim 13, wherein the multilayer structure has a capacitor structure in which the substrate is configured as one of electrodes, the nitride insulator layer constitutes a dielectric, and the other one of the electrodes is provided on the nitride insulator layer.

22. The multilayer structure according to claim 21, wherein the nitride insulating film is formed by nitriding a part of an electrode material of any one of the electrodes.

23. The multilayer structure according to claim 22, wherein the process of nitriding a part of the electrode material of any one of the electrodes is performed electrochemically.

24. The multilayer structure according to any one of claims 21 to 23, wherein the electrode material or the nitride insulating film contains at least one element of Al, B, C, and Si.

25. The multilayer structure according to any one of claims 21 to 24, wherein the one electrode, the other electrode, or the dielectric is subjected to surface enlargement.
